# EUROPEAN PATENT SPECIFICATION

(11) **EP 4 375 180 B1**
(45) Date of publication and mention of the grant of the patent: **08.07.2026**
(21) Application number: 23211806.7
(22) Date of filing: 23.11.2023
(51) Int. Cl.: B63B 3/06, B63B 75/00, B63B 77/00

(54) **METHOD OF CONSTRUCTING AND LAUNCHING AN OFFSHORE SEMI-SUBMERSIBLE PLATFORM AND AN OFFSHORE SEMI-SUBMERSIBLE PLATFORM THUS CONSTRUCTED**
VERFAHREN ZUM BAUEN UND STARTEN EINER HALBTAUCHENDEN OFFSHORE-PLATTFORM UND SO GEBAUTE HALBTAUCHENDE OFFSHORE-PLATTFORM
PROCÉDÉ DE CONSTRUCTION ET DE LANCEMENT D'UNE PLATE-FORME SEMI-SUBMERSIBLE OFFSHORE ET PLATE-FORME SEMI-SUBMERSIBLE OFFSHORE AINSI CONSTRUITE

(30) Priority: 28.11.2022 IT 202200024477
(43) Date of publication of application: 29.05.2024
(73) Proprietor: Fincantieri S.p.A., 34121 Trieste (IT)
(72) Inventor: NEVIEROV, Alessandro, I-34121 TRIESTE (IT); SCHERL, Gianni, I-34121 TRIESTE (IT); ROSSETTO, Enrico, I-34121 TRIESTE (IT)
(74) Representative: Zanettin, Gianluigi

(56) References cited:
- EP-A1- 4 039 969
- WO-A1-2022/199477
- KR-B1- 102 369 641

## Description

### Field of application

The present invention relates to a method of constructing and launching an offshore semi-submersible platform.

In general, an offshore semi-submersible platform is intended to support plants for generating energy from renewable sources, as well as it can be intended to support auxiliary components for offshore farms which produce energy from renewable sources, such as floating power substations, auxiliary support stations, accommodation for technical personnel, etc., for example.

In particular, such a platform is intended to support an offshore wind generator.

An offshore semi-submersible platform can also be used in the oil & gas industry to support plants for the exploitation of hydrocarbon deposits.

### Background art

Wind farms on seacoasts for exploiting clean renewable energy, extractable from the wind, are a well-known and long-established reality and contribute to the reduction of pollution of various kinds, caused by the indiscriminate use of fossil fuels.

In a context of increasing energy production from renewable sources, production from wind sources plays a fundamental role, for both terrestrial and marine implementations thereof. However, the inconvenience associated with installing wind turbines on land and essentially linked to the impact on the landscape and noise pollution leads to moving such installations away from the most densely crowded areas, which however also appear to be the most energy hungry, moving them on sea on the coastal area, where possible.

The current technology for exploiting wind power in the marine industry is limited by the availability of suitable coasts and by the threshold depths of about 50 m beyond which the current technology of poles or pylons fixed into the seabed is halted.

The availability of suitable sites, as described above, is gradually dying out. Furthermore, the availability of energy to be extracted from the wind is much higher moving off the coast in deeper waters, but also more hostile from the point of view of weather-marine conditions.

On the one hand, moving away from the coast will entail higher costs, but on the other it will ensure enormous wind power potential. For example, in the seas of Northern Europe, the intensity of the wind on the high seas is 35-50% greater than on the coast; this means twice as much energy available, since the latter is proportional to the cube of the wind speed.

Such a situation requires searching for new technical solutions which allow extending offshore wind power farms in areas which, until recently, were considered unusable from the point of view of available technical means and from the economic point of view.

Proposals for floating means of various kinds and shapes have been recently put forward, but, due to various technical/constructional and/or installation and/or maintenance complications, they are generally unattractive from the economic point of view.

It is currently estimated that the cost for installing a wind generator fixed to the seabed is lower than that for installing it on an offshore floater. There is therefore the need to actively seek appropriate technical and production solutions which make floating installations less expensive. According to IEA data, global average upfront capital costs for offshore wind power (including transmission) are projected to significantly decline with respect to today's average by 2030. This is based on the assumed learning rate which sees capital costs decline by 15% each time the installed power doubles.

At the moment there are only a few prototype experiments installed offshore in various parts of the world (Norway, USA, Japan) which aim to demonstrate the effective seakeeping and economic convenience of various design proposals which are conceptually very different from one another.

The technical solutions of the suggested floaters vary according to the depth and the weather-marine conditions which they address.

There are different types of floating wind power platforms inspired by the offshore Oil&Gas industry. These are supported by floating structures, with 6 degrees of freedom, which can be energised by wave loads, wind, and ocean currents. The whole system must then be moored and stabilised using mooring lines, ballast, or large floating areas.

The main concepts for floating platforms are: Spar-Buoy, Tension leg platform (TLP), Barge, and Semi-submersible.

### Spar-buoy

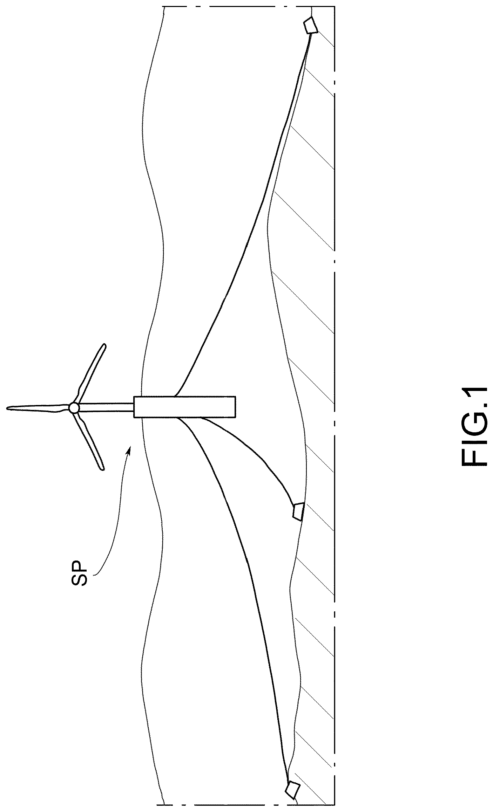

Spar-buoy technology SP (diagrammatically shown in Figure 1) has a simple design, characterised by a very slender cylindrical structure, designed to ensure high transparency to the waves, being mainly intended for the North Seas, which are very energetic seas, characterised by high waves. Such a type, having a small floating area and therefore a very low metacentre (the metacentre geometrically is the point about which the line of action of the hydrostatic thrust rotates due to the small inclinations of the float), is stabilised with ballast at the base so as to lower the centre of gravity G thereof and increase the metacentric height GM thereof (distance between the centre of gravity G and the metacentre M) so as to ensure sufficient stability. It is typically simple to fabricate, but the great depth requirements can create logistical challenges during assembly, transport, and installation, and can limit the use thereof to sites deeper than 100/200 m.

The technical issues associated with this type of floater are the difficulty of constructing the spar-buoy, which requires shipyards with a great launch depth, and the subsequent complexity of towing it to the final site and completing it with the installation of the turbine on the high seas, activities which are technically difficult and expensive.

Such aspects make the use thereof in wind farms, consisting of a large number of floaters, as provided for by the wind farms soon to be installed, complicated and industrially inefficient.

### Tension Leg Platform (TLP)

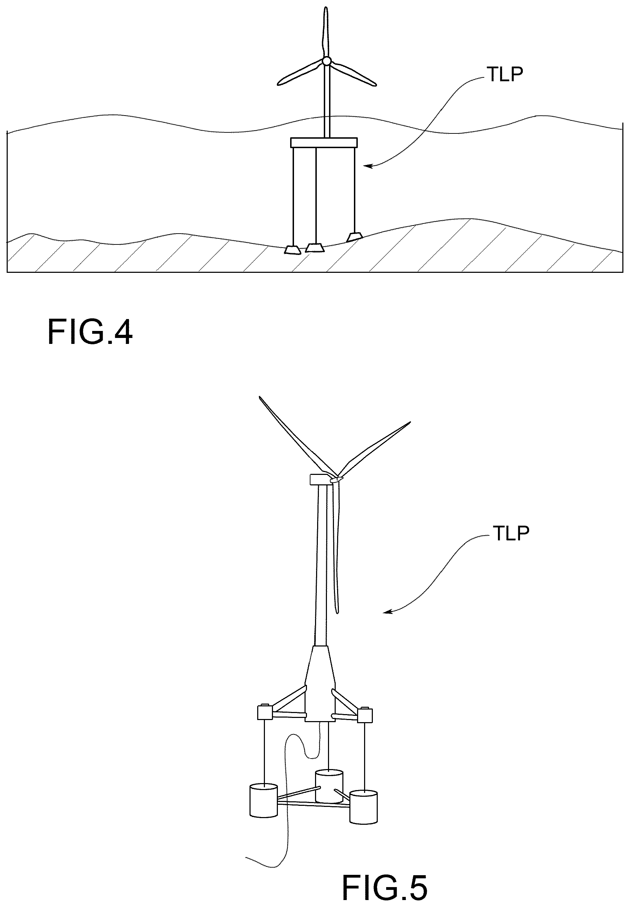

TLP platforms have a semi-submerged floating structure, anchored to the seabed with taut mooring lines which provide the necessary lateral stability, as diagrammatically shown in Figures 4 and 5. This design increases stress on the legs and on the anchoring system, thus generating design, production, and implementation complexities. The installation process is also more complex, and in addition the operational risks are greater in the event that a leg is damaged. As compared to other technologies, more complex and expensive moorings are therefore required, although they are shorter in length.

The TLP solution, although it offers attractive efficiency expectations in terms of relative constructional simplicity, on the other hand, is characterised by major difficulties related to the lack of stability thereof during the step of being transferred to the final site and until the moorings are permanently positioned and tensioned.

The costs, times and technical difficulties when mooring on the final site make this type unattractive, considering the large numbers required by the next Wind Farms, which are characterised by large numbers of floaters.

### Barge platform

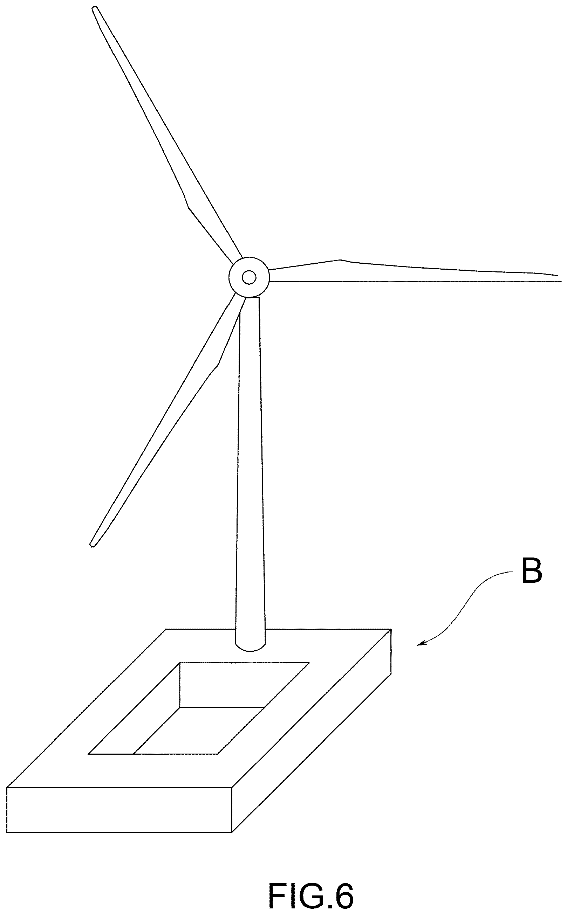

The barge platform B (an example of which is diagrammatically shown in Figure 6) is a shallow-draft floater, made of concrete or steel, held in position by a catenary mooring. It is the floater solution which, of all, provides the maximum floating area, and therefore the best stability, but also the maximum exposure to the force of the waves. Therefore, it is suitable for areas which are not very exposed and with low energy seas and low waves.

An interesting quality of this type of floater is the relative simplicity of construction and the low immersion which allow the completion thereof at the shipyard and then a simple towing to the final site as well as an easy mooring to the predisposed lines; furthermore, typical shipbuilding construction also makes the inspection and maintenance step, as well as any restoration work, cost-effective. These features make the barge platform suitable for mass-production with large numbers and with ease of set-up at the construction plant. However, the Barge type is suitable for areas characterised by limited wave motion.

### Semi-submersible platforms

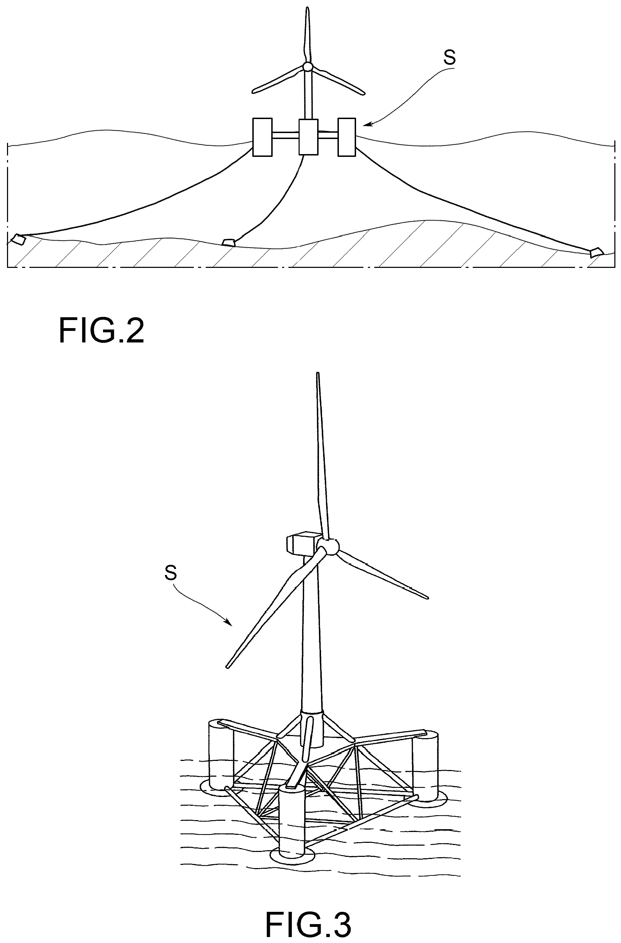

Semi-submersible platforms S are platforms which float semi-submerged on the surface of the sea, as diagrammatically shown in Figure 2. In fact, they are characterised by a part of the hull being immersed to ensure the necessary hydrostatic thrust and by a part being emerged, usually supported by thin columns connected to one another by arms, which exert the correct stabilising lever and a sufficient transparency to wave motion, as shown in Figure 3. The righting moment depends on the surface of each column and on the mutual distance. Increasing the floating area, thus reducing the total size of the unit and the consequent construction complexity, means increasing the response of the floater to hydrodynamic forces and therefore greater movements hindering turbine performance, as increasing the distance between the columns improves the overall performance at the expense of constructability.

This results in the need for a large and heavy structure to maintain stability, often made of steel with high structural weight and with manufacturing complexity due to the many welded connections.

In general, a semi-submersible platform is a versatile structure by virtue of the non-extreme immersion, as for the Spar-Buoy, and of the flexibility to adapt to the sea conditions of the site. However, these platforms are the most complex from a constructional point of view and therefore require more time and higher costs to be manufactured as compared to the others. For a shipyard, this type of hull presents some executive difficulties due to the fragmentation of the components, mainly pipes, when compared with typical shipbuilding carpentry constructions based on preferably plane reinforced metal sheets. Such a geometry also makes the inspection and maintenance step, as well as any restoration work, complex.

Similarly to the Spar-buoy type, the operational and launching immersions do not usually allow the construction of the floater to be completed on land even in the case of semi-submersible platforms (size and weight). This limits the size of the platform, which limit is essentially imposed by the potential of the shipyard and industrial opportunities.

The construction of a semi-submersible platform generally occurs in water with the aid of support barges which are sunk at the time of launching, thus allowing the platform to be launched. As the size of the platform increases, the size of the barges increases proportionally.

In any case, beyond the aforesaid operational limits during the construction step, the features of the semi-submersible platform make it suitable for being constructed in series, with large numbers and with a relative ease of set-up at the construction plant.

Due to the specific conditions of the marine installation site and the weather-marine situations (wind intensity, wave period and height), one type of floater can be more convenient than another one. Each structure has advantages and disadvantages thereof, which make it preferable depending, for example, on the depth of the sea or the distance from the coast (for some platforms the greatest difficulty is transport to the site).

In any case, in addition to the performance features of each individual type of floater, it will also be necessary to take into consideration, in the immediate future, the industrialisation qualities, so as to meet market demands, which will require a large number of wind power floaters within a short time.

In the light of the features of the floating platforms known up to now, in the field of floating wind power platforms, the need to have a floater which meets the following needs is strongly felt:
- Simple and therefore cost-effective construction, in line with the typical methods of the large shipbuilding industry;
- Construction and logistic methods which can be industrialised and allow responding to the immediate demands of the market for having large numbers of large-sized floaters within a very limited time span;
- Limited immersions, such as to allow both the complete set-up at the shipyard and the use of the vessel also in sites with depths starting from 50m to expand the market thereof;
- Stability of the complete floater during the step of towing it to the anchoring site.
- Simple and quick on-site mooring, to make the entire process preceding the production of energy by the floating unit cost-effective (i.e., the so-called CAPEX);
- Reducing and simplifying costs and maintenance operations of the unit during the operational life (i.e., the so-called OPEX).

Given the above, the most promising type of platform for meeting such needs is the semi-submersible platform.

As already highlighted, these platforms are the most complex from a constructional point of view and therefore require more time and higher costs to be manufactured as compared to the others. For a shipyard, this type of hull presents some executive difficulties due to the fragmentation of the components, mainly pipes, when compared with typical shipbuilding carpentry constructions based on preferably plane reinforced metal sheets.

Similarly to the Spar-buoy type, the operational and launching immersions do not usually allow the construction of the floater to be completed on land even in the case of semi-submersible platforms (size and weight). This limits the size of the platform, which limit is essentially imposed by the potential of the shipyard and industrial opportunities.

In the field of floating platforms, the need is thus strongly felt to have a method of constructing an offshore semi-submersible platform which allows overcoming the current operational limits in terms of maximum size of the platform, significantly reducing construction times and costs, without however affecting the performance of the platform itself.

In particular, such a construction method needs to be capable of being industrialised to allow the production and assembly of a large number of large units (wind turbines of 10 MW and more) in short times, compatible with the investment costs of large wind farms planned for the near future. A method for constructing and launching an offshore semi-submersible platform is for example shown in document KR102369641.

Such a need is currently completely unmet.

### Overview of the invention

Therefore, it is the main object of the present invention to eliminate or at least mitigate the drawbacks of the above-mentioned prior art, providing a method of constructing and launching an offshore semi-submersible platform which allows overcoming the current operational limits in terms of maximum size of the platform, significantly reducing construction times and costs, without however penalising the performance of the platform itself.

It is a further object of the present invention to provide a method of constructing and launching an offshore semi-submersible platform which allows carrying out welding operations in a dry environment while operating below the water level, in a simply implementable and operatively reliable manner.

### Brief description of the drawings

The technical features of the invention according to the aforesaid objects can be clearly found in the contents of the claims hereinbelow and the advantages thereof will become more apparent from the following detailed description, given with reference to the accompanying drawings which show one or more embodiments thereof merely given by way of non-limiting example, in which:
- Figure 1 shows a diagrammatic view of a conventional floater of the spar-buoy type for the support of an offshore wind power generator, shown in the condition thereof in which it is anchored to the seabed;
- Figure 2 shows a diagrammatic view of a conventional floater of the semi-submersible type for the support of an offshore wind power generator, shown in the condition thereof in which it is anchored to the seabed;
- Figure 3 shows a perspective view of a conventional floater of the semi-submersible type for the support of an offshore wind power generator;
- Figure 4 shows a diagrammatic view of a conventional floater of the TLP type for the support of an offshore wind power generator, shown in the condition thereof in which it is anchored to the seabed;
- Figure 5 shows a perspective view of a conventional floater of the TLP type for the support of an offshore wind power generator;
- Figure 6 shows a diagrammatic perspective view of a conventional floater of the barge type for supporting an offshore wind power generator;
- Figure 7 shows a perspective view of an offshore semi-submersible platform with some parts removed to better highlight others, obtained with the constructing and launching method according to the invention;
- Figure 8a shows an orthogonal plan view of the platform in Figure 7;
- Figure 8b shows the platform in Figure 7 divided into self-floating sub-assemblies;
- Figure 9 shows an operating step of the method according to the invention which includes - in a dry environment, preferably on land - coupling a temporary thrust box below the semi-arms of the arms of one of the self-floating sub-assemblies into which the offshore semi-submersible platform according to the invention is divided;
- Figures 10a-f show in sequence the operating steps of the method according to the invention which include - in water -coupling two self-floating sub-assemblies into which the offshore semi-submersible platform according to the invention is divided at the respective arms;
- Figure 11 shows a detailed view of the coupling area between two semi-arms belonging to two self-floating sub-assemblies into which the offshore semi-submersible platform according to the invention is divided;
- Figures 12 and 13 show two enlarged details of Figure 11;
- Figure 14 shows a detailed view of the coupling area between two semi-arms belonging to two self-floating sub-assemblies into which the offshore semi-submersible platform is divided, where the coupling is achieved by means of a coaxial insertion pin;
- Figure 15 shows an enlarged detail of Figure 14;
- Figure 16 shows a detailed view of the coupling area between two semi-arms belonging to two self-floating sub-assemblies into which the offshore semi-submersible platform is divided, where the coupling is achieved by means of flanges provided with pins and corresponding perforated insertion counter-flanges;
- Figure 17 shows an enlarged detail of Figure 16;
- Figure 18 shows a perspective view of an offshore semi-submersible platform with some parts removed to better highlight others, obtained with the constructing and launching method according to the invention;
- Figure 19a shows the platform in Figure 18 divided into self-floating sub-assemblies;
- Figure 19b shows the platform in Figure 19b with the self-floating sub-assemblies associated with respective thrust boxes;
- Figure 20 shows a perspective view of an offshore semi-submersible platform with some parts removed to better highlight others, obtained with the constructing and launching method according to the invention;
- Figure 21 shows the platform in Figure 20 divided into self-floating sub-assemblies;
- Figure 22 shows an orthogonal elevation view of two self-floating sub-assemblies of a platform shown during an operating step of alignment in water.

### Detailed description

For simplicity of disclosure, the offshore semi-submersible platform constructed according to the constructing and launching method will be described first, and the method according to the invention will be described afterwards.

With reference to the accompanying drawings, an offshore semi-submersible platform according to the invention has been indicated as a whole by 1.

Here and in the following description and the claims, reference will also be made to the platform 1 in a use condition. In this sense, therefore, any reference to a lower or higher position, to a horizontal or vertical direction, or to an emerged or immersed condition must be understood.

Semi-submersible platform means a floating structure of the semi-submersible type designed to support plants of various types; in general, a semi-submersible platform can be provided with one or more bridges which are not necessarily continuous, as well as it can be free of bridges.

The offshore semi-submersible platform 1 comprises a plurality of floating columns 110, 120, 130, 140.

On the top of one of said floating columns 110, 120, 130, 140 a tower can be installed for supporting a bladed wind generator. Alternatively, resting on the top of said floating columns 110, 120, 130, 140, one or more bridges can be created for supporting plants of various types.

In general, the offshore semi-submersible platform according to the invention is intended to support plants for generating energy from renewable sources, as well as it can be intended to support auxiliary components for offshore farms which produce energy from renewable sources, such as floating power substations, auxiliary support stations, accommodation for technical personnel, etc., for example.

In particular, such a platform is intended to support an offshore wind generator.

The offshore semi-submersible platform can also be used in the oil & gas industry to support plants for the exploitation of hydrocarbon deposits.

Each of said floating columns 110, 120, 130, 140 is connected to at least one other of said floating columns by means of at least one lower structural connection arm 111, 121, 131, 141, 151, 161 which is placed connecting between the two columns near their bases 110b, 120b, 130b, 140b.

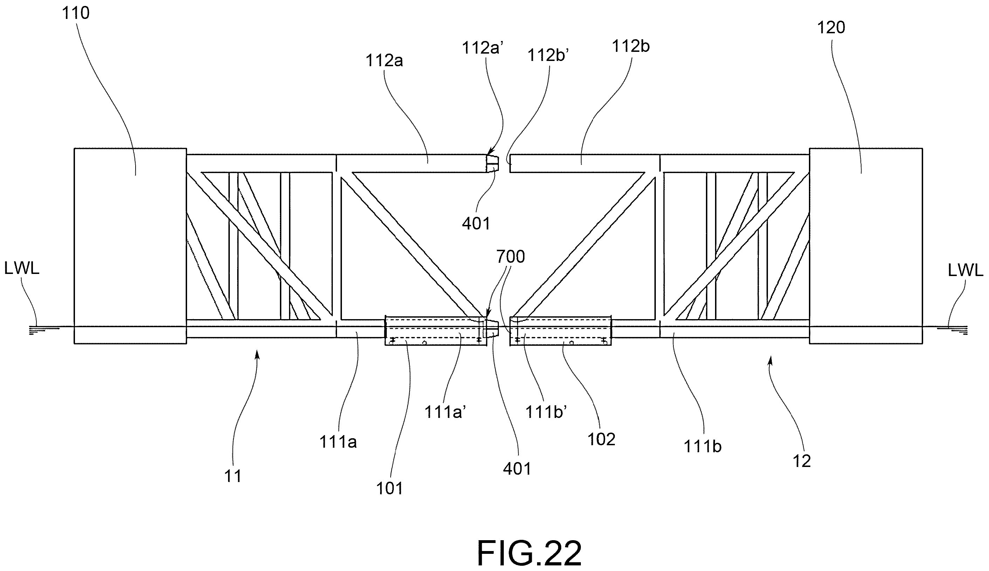

Preferably, each of the lower structural connection arms 111, 121, 131, 141, 151, 161 is arranged at least partially below the launching waterline LWL of the platform itself (as shown in Figure 22).

Alternatively, each of the lower structural connection arms 111, 121, 131, 141, 151, 161 can be arranged above the launching waterline LWL of the platform itself.

Waterline means the level of immersion in water of the platform. The waterline of a semi-submersible platform is variable depending on the load condition of the platform itself. In general, at least three waterlines can be identified: launching; transiting; operating. Each of them is variable within a certain range; therefore, waterline relates to an average value. The shallowest waterline is the launching one, i.e., when the platform load is generally the minimum possible to facilitate the launching operations, net of possible ballast. The deepest waterline is the operating one, i.e., when the load of the platform is generally comprised within the nominal sizing range, in this case being the platform fully operational. The intermediate waterline is the transiting one, i.e., when the load of the platform is generally higher with respect to that at launching, but minimised to facilitate movement operations in water from the construction and launching site to the installation site.

In the offshore submersible platform 1, the fact that the lower structural connection arms 111, 121, 131, 141, 151, 161 are at least partially below the launching waterline LWL of the platform itself means that the lower structural arms are never completely emerged from water and generally, in operational conditions, they are completely immersed in water.

Advantageously, if the lower arms are tubular and therefore internally hollow, the fact that the lower structural connection arms 111, 121, 131, 141, 151, 161 are at least partially below the launching waterline LWL of the platform itself allows to add buoyancy to that offered by the columns.

Each of said lower structural connection arms 111, 121, 131, 141, 151, 161 has a welding junction zone 511, 521, 531, 541, 551, 561 placed in an intermediate position between the respective two columns.

The aforesaid intermediate position can correspond to the centreline position or to any position between the two columns.

In said junction zone 511, 521, 531, 541, 551, 561, axial alignment means 400 are present between the two portions 111a and 111b, 121a and 121b, 131a and 131b, 141a and 141b, 151a and 151b, 161a and 161b of said structural arm, extending from two adjacent columns.

The presence of welding junction zones and the presence of axial alignment means at such junction zones are the traces left by the constructing and launching method according to the invention, as it will be apparent from the following description.

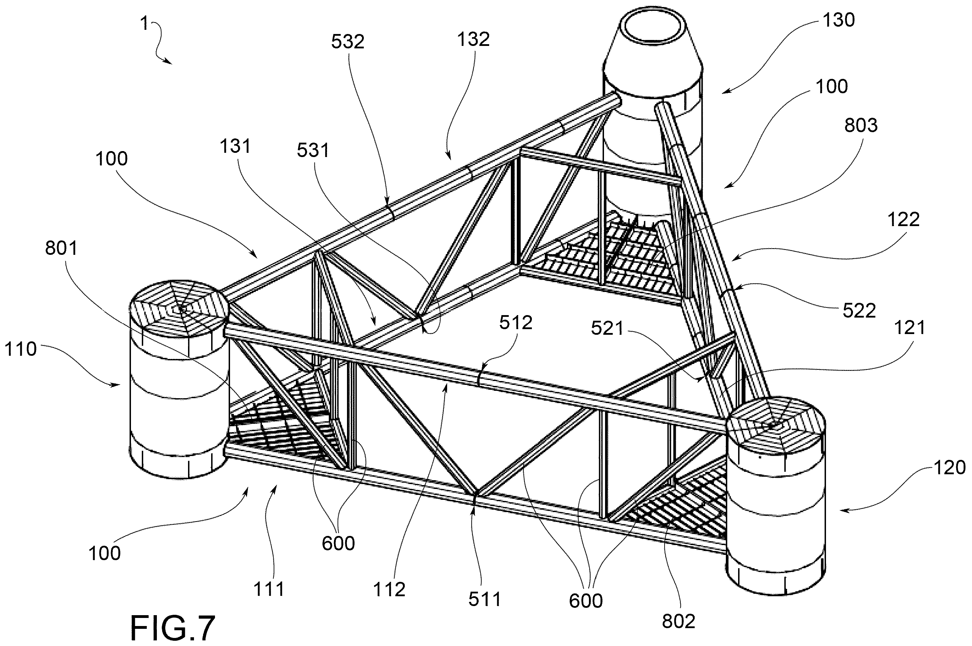

Preferably, as shown in Figures 7, 18 and 20, each of said floating columns 110, 120, 130, 140 is connected to said at least one other floating column by at least one further upper structural connection arm 112, 122 , 132, 142, 152, 162 which is placed connecting between the two columns at a greater height than that of the respective lower connection arm 111, 121, 131, 141, 151, 161, preferably above the launching waterline LWL of the platform itself.

Each of said upper structural connection arms 112, 122, 132, 142, 152, 162 has a welding junction zone 512, 522, 532, 542, 552, 562 placed in an intermediate position between the respective two columns.

The aforesaid intermediate position can correspond to the centreline position or to any position between the two columns.

In said junction zone 512, 522, 532, 542, 552, 562, axial alignment means 400 are present between the two portions 112a and 112b, 122a and 122b, 132a and 132b, 142a and 142b, 152a and 152b, 162a and 162b of said structural arm, extending from two adjacent columns.

Also in this case, the presence of welding junction zones and the presence of axial alignment means at such junction zones are the traces left by the constructing and launching method according to the invention, as it will be apparent from the following description.

Preferably, as shown in the accompanying Figures, the lower connection arms 111, 121, 131, 141, 151, 161 are connected to the respective upper connection arms 112, 122, 132, 142, 152, 162 by intermediate structures 600.

Advantageously, said intermediate structures 600 are positioned between the lower and upper arms, spaced from the junction zones.

Preferably, said (lower and upper) connection arms consist of tubular bodies, having a circular or polygonal section.

Preferably, said intermediate structures consist of tubular bodies, having a circular or polygonal section.

According to the embodiments shown in Figures 7, 18 and 20, the lower connection arms 111, 121, 131, 141, 151, 161 and the respective upper connection arms 112, 122, 132, 142, 152, 162 consist of rectilinear tubular bodies, parallel to one another, preferably arranged horizontally.

In accordance with the embodiments shown in Figures 7, 18 and 20, the aforesaid intermediate structures 600 consist of rectilinear tubular bodies, preferably arranged vertically or diagonally with respect to the lower and upper arms arranged horizontally.

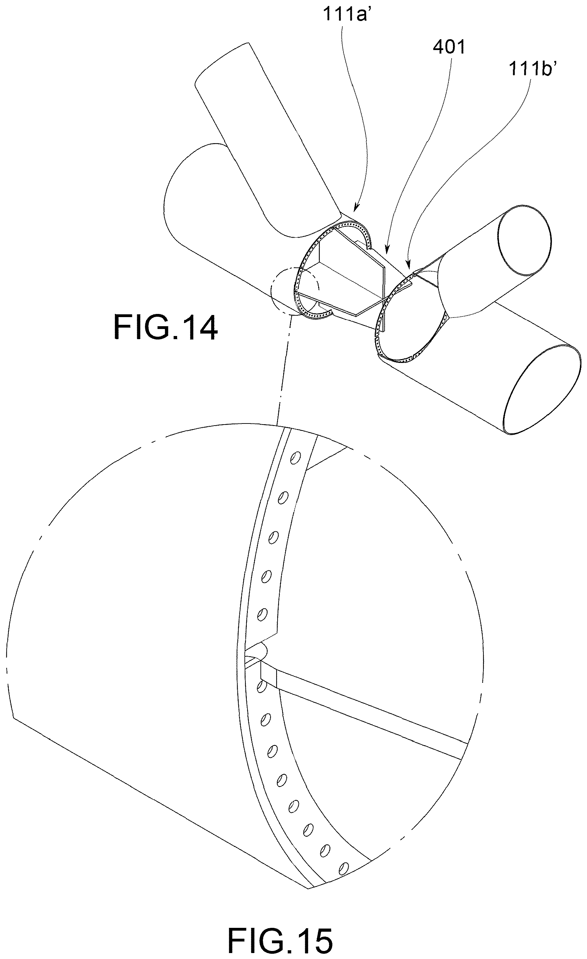

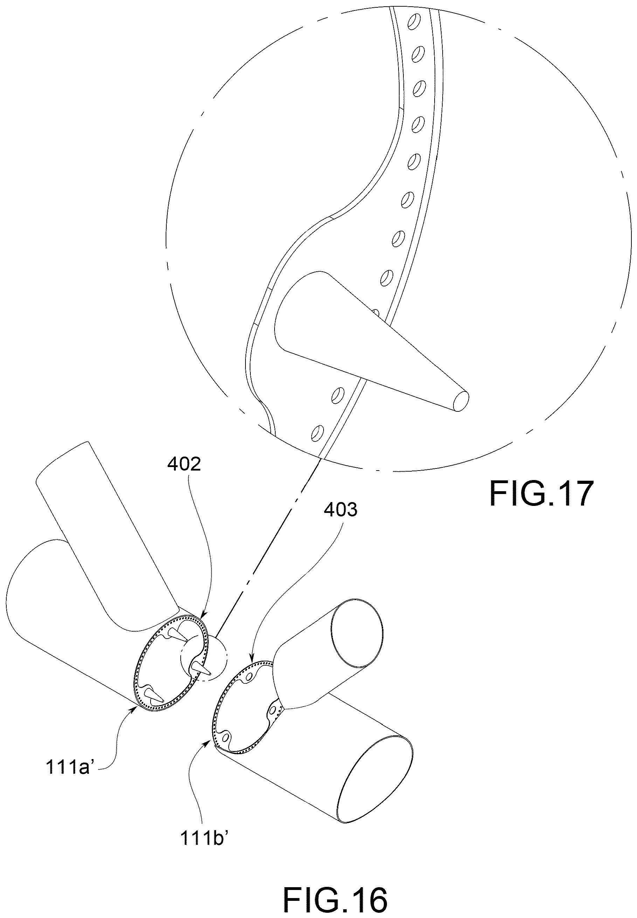

Preferably, the aforesaid axial alignment means 400 consist of:
- pins 401 coaxial to the tubular bodies, as shown in Figures 14 and 15; and/or
- flanges provided with pins 402 and corresponding perforated insertion counter-flanges 403, as shown in Figures 16 and 17.

Advantageously, as shown in Figure 7, the platform 1 can comprise platform motion damping structures 801, 802, 803 associated with the floating columns and/or the lower connection arms.

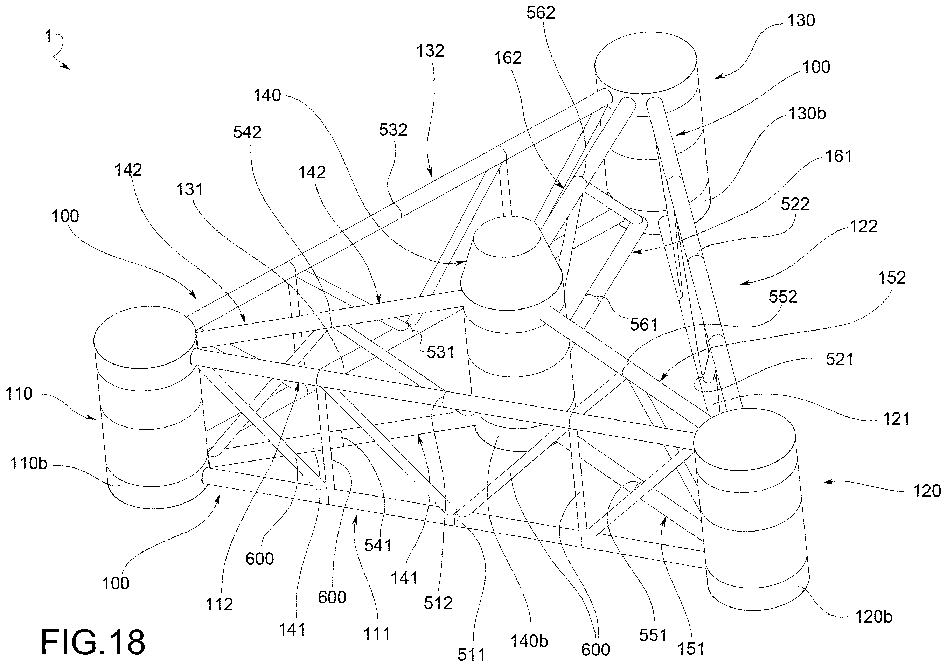

As shown in Figures 7 and 18, the platform 1 can comprise a peripheral annular structure 100 which in turn comprises at least one part of said plurality of floating columns 110, 120, 130. Each of the columns forming part of said peripheral annular structure 100 is connected to at least two other adjacent floating columns forming part of said annular structure by means of at least two lower structural connection arms 111, 121, 131 which are placed connecting between the columns near their bases 110b, 120b, 130b, preferably at least partially below the launching waterline LWL of the platform itself. Said lower connection arms give structural continuity to said peripheral annular structure 100.

Advantageously, each of the columns forming part of said peripheral annular structure 100 is connected to at least two other adjacent floating columns forming part of said annular structure also by means of at least two upper structural connection arms 112, 122, 132 which are placed connecting between the columns at a greater height than that of the respective lower connection arms 111, 121, 131, preferably above the launching waterline LWL of the platform itself. Said upper connection arms give further structural continuity to said peripheral annular structure 100.

Preferably, as shown in Figures 7 and 18, the aforesaid peripheral annular structure 100 has a polygonal shape and has one of said floating columns in each of the vertices of said polygonal shape.

According to an embodiment not shown in the accompanying Figures, the aforesaid peripheral annular structure 100 of polygonal shape can comprise one or more floating columns arranged along the sides of said polygonal shape.

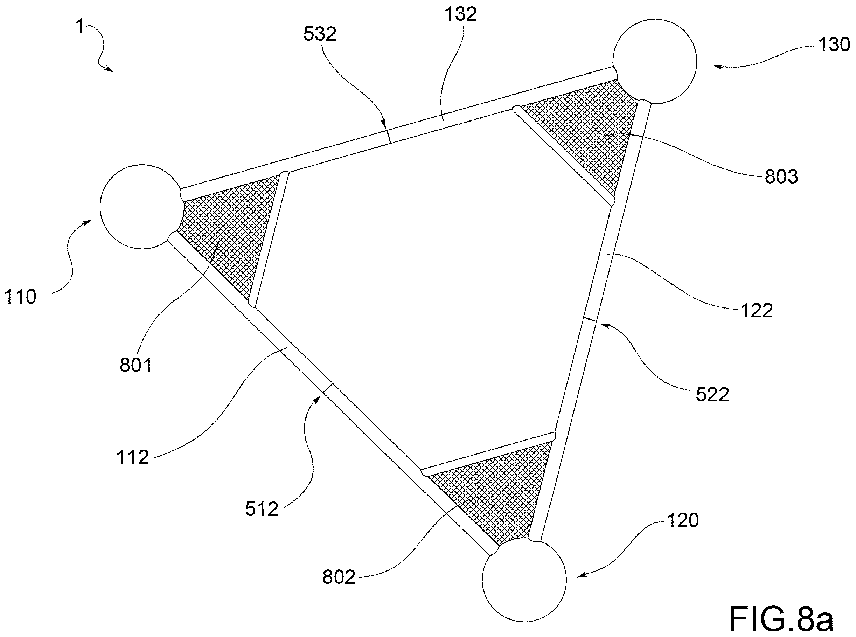

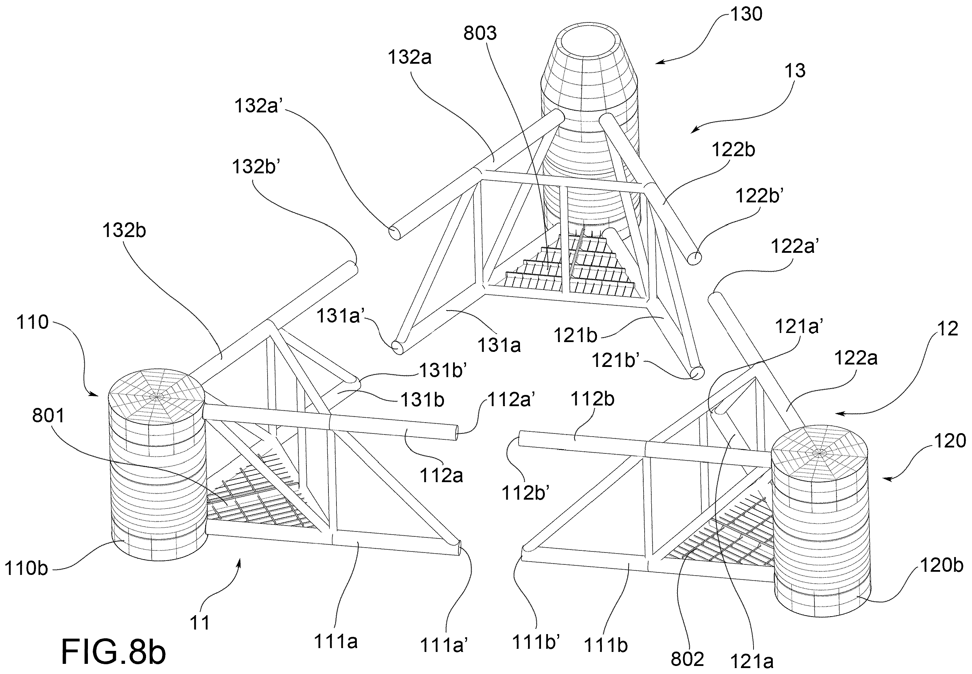

According to the embodiment shown in Figures 7, 8a and 8b, said annular structure is triangular in shape, preferably equilateral, and comprises three floating columns 110, 120, 130, preferably identical to each other, each of which is placed at one of the vertices of the triangular annular structure.

The aforesaid peripheral annular structure 100 may not have a polygonal shape, but have a curvilinear shape, for example circular or elliptical.

In accordance with the embodiment shown in Figure 18, the platform 1 can comprise at least one internal floating column 140 which is arranged in the internal space delimited by said annular structure and is structurally connected to one or more columns 110, 120, 130 of said annular structure 100 by means of one or more internal lower structural connection arms 141, 151, 161.

Advantageously, the internal floating column 140 can be structurally connected to one or more columns 110, 120, 130 of said annular structure 100 also by means of one or more upper internal structural connection arms 142, 152, 162, which are placed connecting between the columns at a greater height than that of the respective lower internal connection arms 141, 151, 161, preferably above the launching waterline LWL of the platform itself.

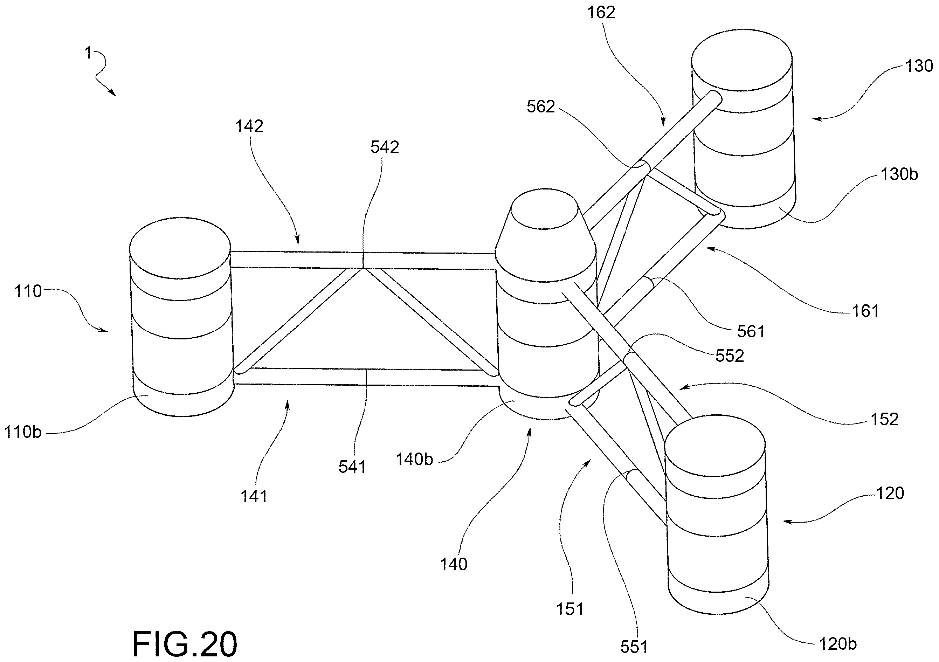

Alternatively, as shown in Figure 20, the platform 1 may be free of the aforesaid peripheral annular structure and have a star structure having one of said floating columns 140 which is arranged at the centre of said star. The remaining floating columns 110, 120, 130 are arranged radially about said central column 140 and are connected thereto by means of lower internal structural arms 141, 151, 161, which are placed connecting between the columns near their bases 110b, 120b, 130b, 140b, preferably at least partially below the launching waterline LWL of the platform itself.

Advantageously, the floating columns 110, 120, 130 which are arranged radially about said central column 140 can also be connected thereto by means of upper internal structural arms 142, 152, 162, which are placed connecting between the columns at a greater height than that of the respective lower internal connection arms 141, 151, 161, preferably above the launching waterline LWL of the platform itself.

Preferably, the floating columns and the connection arms, as well as the intermediate structures 600 between the arms and the motion damping structures, if provided, are made of steel.

The method of constructing and launching an offshore semi-submersible platform 1 according to the invention will now be described.

In general, the offshore semi-submersible platform 1, which can be constructed and launched according to the method of the invention, comprises a plurality of floating columns 110, 120, 130, 140, each of which is connected to at least one other of said floating columns by means of at least one lower structural connection arm 111, 121, 131, 141, 151, 161 which is placed connecting between the two columns near their bases 110b, 120b, 130b, 140b.

According to the invention, the method comprises the operating step a) of creating said semi-submersible platform 1 in a dry environment by dividing it into a plurality of sub-assemblies 11, 12, 13, 14, each of which comprises:
- at least one of the floating columns 110, 120, 130, 149 and
- At least one semi-arm 111a and 111b, 121a and 121b, 131a and 131b, 141a and 141b, 151a and 151b, 161a and 161b of the respective lower structural connection arm 111, 121, 131, 141, 151, 161, the semi-arm being already structurally integrated into the column itself and extending cantilevered therefrom with a respective free end 111a', 111b', 121a', 121b', 131a', 131b', 141a', 141b', 151a', 151b', 161a', 161b'.

Semi-arm means one of the two end portions into which a structural connection arm can be divided.

The single sub-assembly can also comprise two or more floating columns. In this case, the respective connection arms between the columns of the same sub-assembly are already made directly in a dry environment.

Advantageously, implementation in a dry environment can occur on land (for example on a quay B) or on a sinkable barge.

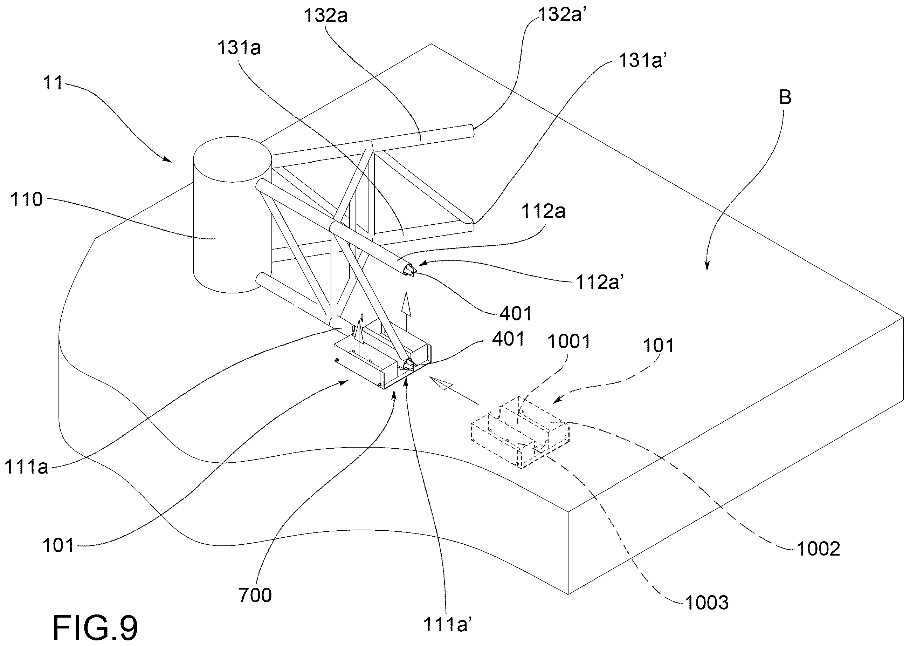

As shown in Figure 9, the method further comprises the operating step b) of providing each sub-assembly 11, 12, 13, 14 in a dry environment (preferably on land or on a sinkable barge) with at least one temporary thrust box 101, 102; 201, 202; 301, 302, 401, 402, 501, 502, 601, 602 which is positioned below said at least one semi-arm 111a and 111b, 121a and 121b, 131a and 131b, 141a and 141b, 151a and 151b, 161a and 161b and is provided with a housing seat 1001 of the respective semi-arm and at least one ballast chamber 1002, 1003. Figure 9 shows the execution of step b) on land, on a quay B.

The method then comprises the operating step c) of separately launching in water the individual sub-assemblies 11, 12, 13, 14 which float independently by virtue of the respective floating column 110, 120, 130, 140.

Advantageously, the launch of the sub-assemblies can be carried out by means of any method adapted for the purpose, such as by masonry basin flooding, floating basin immersion, or immersion from an inclined slipway (if the operating steps conducted in a dry environment are conducted on land) or sinking barges (if the operating steps conducted in a dry environment are conducted on a sinkable barge), for example.

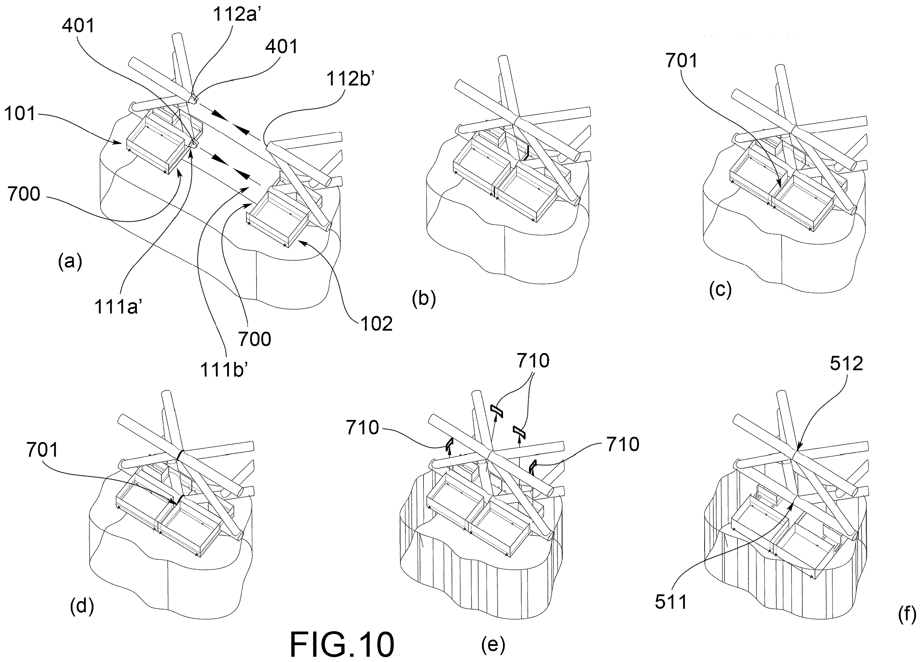

The method then comprises the following operating steps:
d) adjusting for each sub-assembly the ballast of the respective temporary thrust box so as to obtain a balanced floatation of the sub-assembly which allows the free end of said at least one semi-arm to be positioned at the same height as the free end of the semi-arm of the sub-assembly intended to take an adjacent position (as shown in Figure 22);
e) bringing the sub-assemblies at the free ends of the respective semi-arms close to each other two-by-two until they are aligned, with the aid of axial alignment means 400 previously arranged at the free ends of the semi-arms (see Figure 10a);
f) connecting the temporary thrust boxes to each other two-by-two;
g) welding the free ends of the semi-arms together so as to create a structural connection between the columns;
h) removing the temporary thrust boxes (see Figures 10e and 10f).

Operatively, according to the invention, the temporary thrust boxes 101, 102; 201, 202; 301, 302, 401, 402, 501, 502, 601, 602 have essentially two functions:
- positioning the respective semi-arm with the free end in the correct position to allow the alignment and welding thereof with the free end of the semi-arm of an adjacent sub-assembly; and
- allowing a balanced floatation of the sub-assembly, preventing the weight of the lower semi-arm, which extends cantilevered from the column, from tilting the latter with the risk of sinking the column itself and the entire sub-assembly.

According to the invention, dividing the platform 1 into a plurality of self-floating sub-assemblies and the aid of temporary thrust boxes allow to overcome the current operational limits, in terms of maximum size of the platform. The platform is no longer constructed to be launched already complete; conversely, according to the invention, the platform is constructed to be launched in blocks (self-floating sub-assemblies) which are then structurally connected to one another in water. Thereby, there are no limits to the final size of the platform. Such a constructing and launching method does not require changes to the structure of the semi-submersible platform, the performance of which is therefore not penalised. Furthermore, following the method according to the invention, production times and costs are significantly reduced.

Preferably, each of the lower structural connection arms 111, 121, 131, 141, 151, 161 (and therefore the respective semi-arms) is placed connecting between the two columns near their bases 110b, 120b, 130b, 140b, at least partially below the launching waterline LWL of the platform itself (as shown in Figure 22).

Alternatively, each of the lower structural connection arms 111, 121, 131, 141, 151, 161 (and therefore the respective semi-arms) can be arranged above the launching waterline LWL of the platform itself.

Advantageously, the fact that the semi-arms of the lower structural connection arms 111, 121, 131, 141, 151, 161 are at least partially below the launching waterline LWL of the platform itself allows the use of thrust boxes having reduced heights with respect to the case in which the lower arms are positioned above the launching waterline LWL. In the latter case, in fact, the boxes must have a height at least equal to the positioning height of the semi-arms with respect to the launching waterline LWL. Conversely, in the first (preferred) case, the thrust boxes simply have to support the semi-arms which are completely immersed or at least partially immersed at launch and can extend much less in height above the launching waterline LWL.

Preferably, if the lower semi-arms are placed at least partially below the launching line, the method according to the invention includes the following:
- during step f) of connecting the temporary thrust boxes to each other two-by-two, a watertight chamber is created at the junction zone between the free ends of the respective two semi-arms (Figure 10b); and
- said welding step g) is conducted in a dry environment despite being below the water level by virtue of said watertight chamber (Figure 10d).

By virtue of the method of constructing and launching an offshore semi-submersible platform according to the preferred embodiment of the invention, it is possible for welding to be carried out in a dry environment while operating below the water level, in a manner simple to implement and operatively reliable.

In the (not preferred) case in which the lower semi-arms are placed above the launching line, they are already in an emerged condition. The welding step g) is therefore carried out in a dry environment since the junction zone is naturally located above the water level. Therefore, during step f) of connecting the temporary thrust boxes to each other two-by-two, it is not necessary to create a watertight chamber at the junction zone between the free ends of the respective two semi-arms.

Advantageously, between step f) and step g), a further step of balancing the floatation level can be included (see Figure 10c).

Preferably, as shown in the accompanying Figures, in the offshore semi-submersible platform 1 each of said floating columns 110, 120, 130, 140 is connected to said at least one other floating column by at least one further upper structural connection arm 112, 122, 132, 141, 152, 162, which is placed connecting between the two columns at a greater height than that of the respective lower connection arm 111, 121, 131, 141, 151, 161, preferably above the launching waterline LWL of the platform itself.

In particular, each of said sub-assemblies 11, 12, 13, 14 further comprises at least one semi-arm 112a; 112b; 122a; 122b; 132a; 132b; 142a; 142b; 152a; 152b; 162a; 162b of the respective upper connection arm 112; 122; 132; 142; 152; 162 which is already structurally integrated into the column itself and extends cantilevered therefrom with a respective free end 112a'; 112b'; 122a'; 122b'; 132a'; 132b'; 142a'; 142b'; 152a'; 152b'; 162a'; 162b'.

Operatively, the semi-arms 112a; 112b; 122a; 122b; 132a; 132b; 142a; 142b; 152a; 152b; 162a; 162b of the respective upper connection arms 112; 122; 132; 142; 152; 162 of the different sub-assemblies 11, 12, 13, 14 are connected to one another similarly to the semi-arms 111a; 111b; 121a; 121b; 131a; 131b; 141a; 141b; 151a; 151b; 161a; 161b of the respective lower connection arms 111; 121; 131; 141; 151; 161, however, without the direct aid of the thrust boxes, since operations are above the water level. Operatively, in fact, the boxes directly support only the semi-arms of the lower arms, balancing the weight of the latter and therefore of the sub-assembly, without necessarily having to reach the height of the semi-arms of the upper arms.

In the preferred case in which the upper connection arms (and the respective semi-arms) are placed above the launching waterline LWL, the method provides for the semi-arms 112a; 112b; 122a; 122b; 132a; 132b; 142a; 142b; 152a; 152b; 162a; 162b of the respective upper connection arms 112; 122; 132; 142; 152; 162 of the different sub-assemblies 11, 12, 13, 14 being connected to one another similarly to the semi-arms of the respective lower connection arms 111; 121; 131; 141; 151; 161, however, without the aid of the watertight chamber defined between the thrust boxes, since operations are above the water level.

Advantageously, in the platform 1, the lower connection arms 111; 121; 131; 141; 151; 161 are connected to the respective upper connection arms 112; 122; 132; 142; 152; 162 by intermediate structures 600. Said intermediate structures 600 are installed on said sub-assemblies 11, 12, 13, 14 in a dry environment (preferably on land or on a sinkable barge), in general before the launching step c).

Preferably, said sub-assemblies are made so that said intermediate structures 600 are positioned between the semi-arms of the lower and upper arms spaced from the free ends of the semi-arms themselves, so as not to interfere with the connection operations between sub-assemblies.

Preferably, said connection arms consist of tubular bodies, having a circular or polygonal section.

Preferably, said intermediate structures consist of tubular bodies, having a circular or polygonal section.

According to the embodiments shown in Figures 7, 18 and 20, the lower connection arms 111, 121, 131, 141, 151, 161 and the respective upper connection arms 112, 122, 132, 142, 152, 162 consist of rectilinear tubular bodies, parallel to one another, preferably arranged horizontally.

In accordance with the embodiments shown in Figures 7, 18 and 20, the aforesaid intermediate structures 600 consist of rectilinear tubular bodies, preferably arranged vertically or diagonally.

Preferably, the aforesaid axial alignment means 400 consist of:
- pins 401 coaxial to the tubular bodies, as shown in Figures 14 and 15; and/or
- flanges provided with pins 402 and corresponding perforated insertion counter-flanges 403, as shown in Figures 16 and 17.

Advantageously, as shown in Figure 7, the platform 1 can comprise platform motion damping structures 801, 802, 803 associated with the floating columns and/or the lower connection arms. Said platform motion damping structures 801, 802, 803 are installed on each sub-assembly in a dry environment (preferably on land or on a sinkable barge), in general before the launching step c).

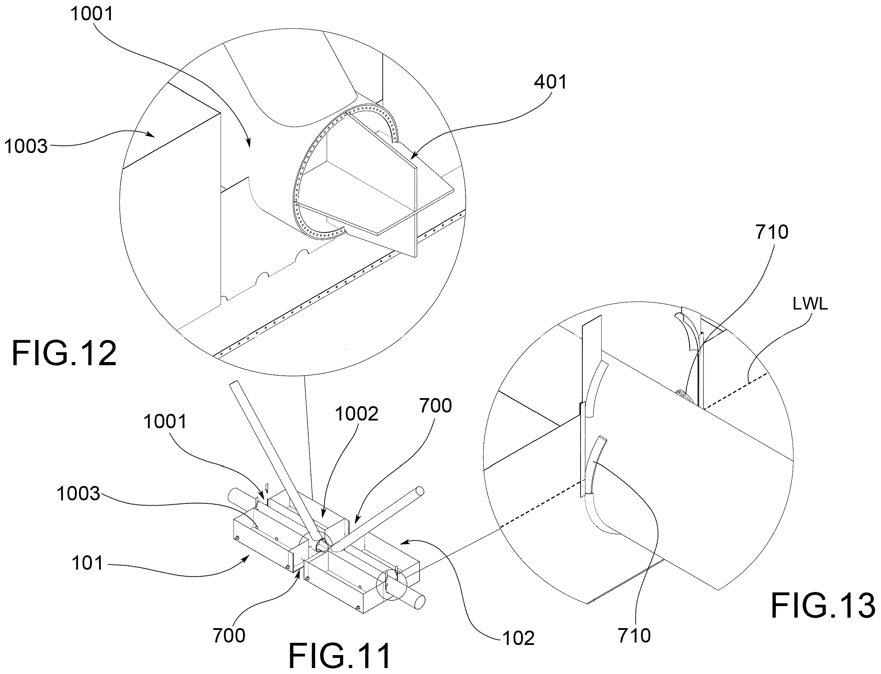

Advantageously, each temporary thrust box 101, 102; 201, 202; 301, 302 is provided with a coupling portion 700 for interconnection with another thrust box. Operatively, as shown in Figures 11, 12 and 13, the interconnection between two boxes by means of the respective coupling portions 700 and the use of watertight septa 710 allows the respective housing seats 1001 of the semi-arms to be hydraulically isolated, creating said watertight chamber 701 at the junction zone between the free ends of the respective two semi-arms.

Preferably, as shown in Figures 10e and 10f, the step h) of removing the temporary thrust boxes includes operations of disconnecting the boxes from the lower arms and sinking them by ballast.

As shown in Figures 7, 8b, 18 e 19, the platform 1 can comprise a peripheral annular structure 100 which in turn comprises at least one part of said plurality of floating columns 110, 120, 130. Each of the columns forming part of said peripheral annular structure 100 is connected to at least two other adjacent floating columns forming part of said annular structure by means of at least two lower structural connection arms 111, 121, 131 which are placed connecting between the columns near their bases 110b, 120b, 130b, preferably at least partially below the launching waterline LWL of the platform itself. Said lower connection arms give structural continuity to said peripheral annular structure 100.

Each of said sub-assemblies 11, 12, 13 comprises at least one of the floating columns 110, 120, 130 forming part of said annular structure and at least two semi-arms 111a; 111b; 121a; 121b; 131a; 131b of the respective lower connection arms 111; 121; 131 which are already structurally integrated in the column itself and extend cantilevered therefrom with respective free ends 111a'; 111b'; 121a'; 121b'; 131a'; 131b'.

Advantageously, each of the columns forming part of said peripheral annular structure 100 is connected to at least two other adjacent floating columns forming part of said annular structure also by means of at least two upper structural connection arms 112, 122, 132 which are placed connecting between the columns at a greater height than that of the respective lower connection arms 111, 121, 131, preferably above the launching waterline LWL of the platform itself. Said upper connection arms give further structural continuity to said peripheral annular structure 100.

In this case, each of said sub-assemblies 11, 12, 13 additionally comprises at least two semi-arms 112a; 112b; 122a; 122b; 132a; 132b of the respective upper connection arms 112; 122; 132 which are already structurally integrated into the column itself and extend cantilevered therefrom with respective free ends 112a'; 112b'; 122a'; 122b'; 132a'; 132b'.

Preferably, as shown in Figures 7 and 18, the aforesaid peripheral annular structure 100 has a polygonal shape and has one of said floating columns in each of the vertices of said polygonal shape.

According to an embodiment not shown in the accompanying Figures, the aforesaid peripheral annular structure 100 of polygonal shape can comprise one or more floating columns arranged along the sides of said polygonal shape.

According to the embodiment shown in Figures 7, 8a and 8b, said annular structure is triangular in shape, preferably equilateral, and comprises three floating columns 110, 120, 130, preferably identical to each other, each of which is placed at one of the vertices of the triangular annular structure.

In this case, each of said sub-assemblies 11, 12, 13 comprises one of the three floating columns 110, 120, 130 and at least two semi-arms 111a; 111b; 121a; 121b; 131a; 131b of the respective lower connection arms 111; 121; 131 which are already structurally integrated in the column itself and extend cantilevered therefrom with respective free ends 111a'; 111b'; 121a'; 121b'; 131a'; 131b'.

Advantageously, again in accordance with the embodiment shown in Figures 7, 8a and 8b, each of the three columns forming part of said peripheral annular structure 100 is connected to the two other adjacent floating columns also by means of at least two upper structural connection arms 112, 122, 132 which are placed connecting between the columns at a greater height than that of the respective lower connection arms 111, 121, 131, preferably above the launching waterline LWL of the platform itself.

In this case, each of said three sub-assemblies 11, 12, 13 additionally comprises at least two semi-arms 112a; 112b; 122a; 122b; 132a; 132b of the respective upper connection arms 112; 122; 132 which are already structurally integrated into the column itself and extend cantilevered therefrom with respective free ends 112a'; 112b'; 122a'; 122b'; 132a'; 132b'.

The aforesaid peripheral annular structure 100 may not have a polygonal shape, but have a curvilinear shape, for example circular or elliptical.

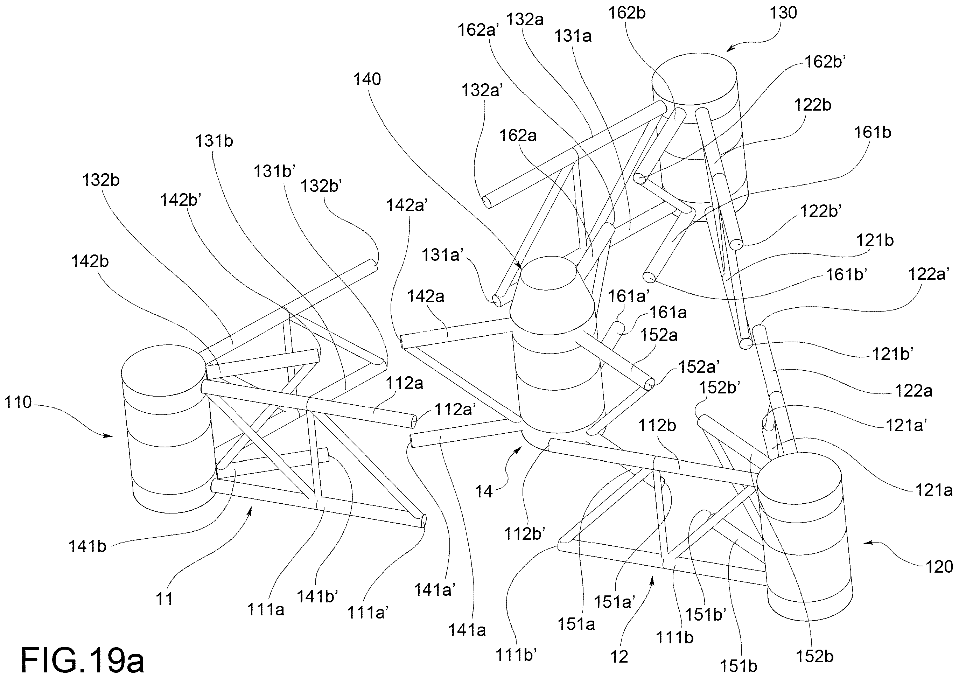

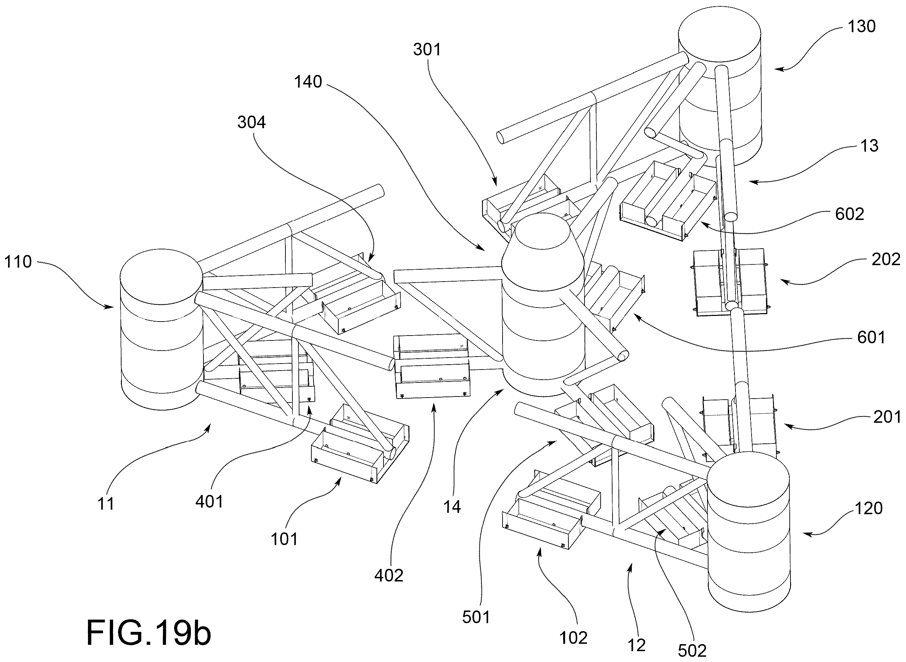

In accordance with the embodiment shown in Figures 18 and 19, the platform 1 can comprise at least one internal floating column 140 which is arranged in the internal space delimited by said annular structure and is structurally connected to one or more columns 110, 120, 130 of said annular structure 100 by means of one or more internal lower structural connection arms 141, 151, 161.

Said at least one internal floating column 140 is part of a sub-assembly 14 comprising at least one or more semi-arms of internal lower structural connection arms.

Advantageously, the internal floating column 140 can be structurally connected to one or more columns 110, 120, 130 of said annular structure 100 also by means of one or more upper internal structural connection arms 142, 152, 162, which are placed connecting between the columns at a greater height than that of the respective lower internal connection arms 141, 151, 161 above the waterline of the platform itself.

In this case, the sub-assembly 14 with said at least one internal floating column 140 comprises at least one or more semi-arms of internal upper structural connection arms.

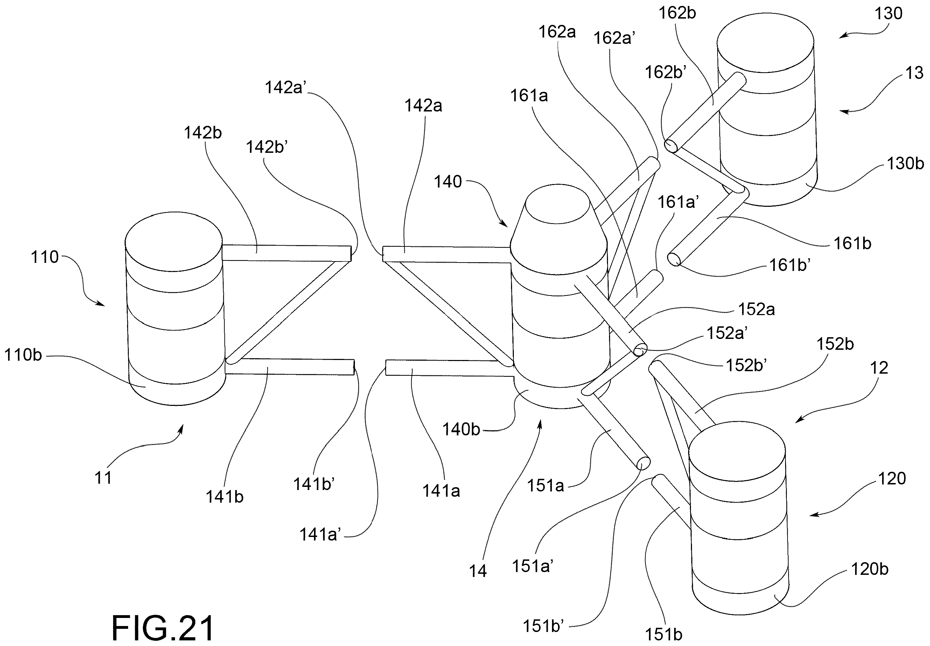

Alternatively, as shown in Figures 20 and 21, the platform 1 can be free of the aforesaid peripheral annular structure and have a star structure having one of said floating columns 140 which is arranged at the centre of said star. The remaining floating columns 110, 120, 130 are arranged radially about said central column 140 and are connected thereto by means of lower internal structural arms 141, 151, 161, which are placed connecting between the columns near their bases 110b, 120b, 130b, 140b, preferably at least partially below the launching waterline LWL of the platform itself.

In this case, the sub-assemblies into which the platform is divided comprise:
- a central sub-assembly 14 which in turn comprises said central column 140 and a plurality of semi-arms of the respective lower connection arms which are already structurally integrated in the central column 140 itself and extend cantilevered therefrom with respective free ends;
- a plurality of peripheral sub-assemblies 11, 12, 13 each of which in turn comprises at least one of the columns 110, 120, 130 arranged radially and at least one semi-arm of the respective lower connection arm.

Advantageously, the floating columns 110, 120, 130 which are arranged radially about said central column 140 can also be connected thereto by means of upper internal structural arms 142, 152, 162, which are placed connecting between the columns at a greater height than that of the respective lower internal connection arms 141, 151, 161, preferably above the launching waterline LWL of the platform itself. In this case, the central sub-assembly 14 also comprises a plurality of semi-arms of the respective upper connection arms, while each of the peripheral sub-assemblies 11, 12, 13 comprises at least one semi-arm of the respective upper connection arm.

The invention provides several advantages, some of which have already been described.

The method of constructing and launching an offshore semi-submersible platform according to the invention allows to overcome the current operational limits in terms of maximum size of the platform, thus significantly reducing construction times and costs, without however affecting the performance of the platform itself.

By virtue of the fact that the semi-submersible platform is divided into self-floating sub-assemblies, which can be installed separately, the platform can be assembled directly in water. Thereby the final size of the platform is no longer tied to the overall size of the shipyard or to the availability of barges suitably sized for transport, launch and a possible assembly.

The method of constructing and launching an offshore semi-submersible platform according to the invention allows welding to be carried out in a dry environment while operating below the water level, in a manner simple to implement and operatively reliable.

The method according to the invention therefore allows to seize the technical and economic opportunities characterised by:
- Flexibility in the choice of production sites for structural steel sub-assemblies;
- Ease of transport of the structural sub-assemblies by sea to the final assembly site, advantageously located as close as possible to the final destination wind farm;
- Reduction of the space required in the construction site of the sub-assemblies;
- Reduction of the space required on land at the assembly site;
- Elimination of the difficulties associated with the launching of large bulky structures which are hundreds of meters long and weigh several thousand tons, when completed in a single final floating piece

Therefore, the invention thus devised achieves the pre-set objects.

Obviously, in the practice thereof, it may also take different shapes and configurations from that disclosed above, without departing from the present scope of protection.

Moreover, all details may be replaced by technically equivalent elements, and any size, shape, and material may be used according to needs.

## Claims

1. A method of constructing and launching an offshore semi-submersible platform (1), wherein said offshore semi-submersible platform (1) comprises a plurality of floating columns (110, 120, 130, 140), each of which is connected to at least one other of said floating columns by means of at least one lower structural connection arm (111; 121; 131; 141; 151; 161) which is placed connecting between the two columns near their bases,
said method being **characterised in that** it comprises the following operating steps:
a) making said semi-submersible platform (1) in a dry environment by dividing it into a plurality of sub-assemblies (11, 12, 13, 14) each comprising at least one of the floating columns (110, 120, 130, 140) and at least one semi-arm (111a; 111b; 121a; 121b; 131a; 131b; 141a; 141b; 151a; 151b; 161a; 161b) of the respective lower structural connection arm (111; 121; 131;, 141; 151; 161) which semi-arm is already structurally integrated in the column itself and extends cantilevered therefrom with a respective free end (111a'; 111b'; 121a'; 121b'; 131a'; 131b'; 141a'; 141b'; 151a'; 151b'; 161a'; 161b');
b) providing each sub-assembly (11, 12, 13; 14) in a dry environment with at least one temporary thrust box (101, 102; 201, 202; 301, 302; 401, 402; 501, 502; 601, 602), which is positioned below said at least one semi-arm (111a; 111b; 121a; 121b; 131a; 131b; 141a; 141b; 151a; 151b; 161a; 161b) and is provided with a housing seat of the respective semi-arm and at least one ballast chamber;
c) separately launching into the water the individual sub-assemblies (11, 12, 13, 14) which float independently by virtue of the respective floating column;
d) adjusting for each sub-assembly the ballast of the respective temporary thrust box so as to obtain a balanced floatation of the sub-assembly which allows the free end of said at least one semi-arm to be positioned at the same height as the free end of the semi-arm of the sub-assembly intended to assume an adjacent position;
e) bringing the sub-assemblies at the free ends of the respective semi-arms close to each other two-by-two until they are aligned, with the aid of axial alignment means (400) previously arranged at the free ends of the semi-arms;
f) connecting the temporary thrust boxes to each other two-by-two;
g) welding the free ends of the semi-arms together so as to create a structural connection between the columns;
h) removing the temporary thrust boxes.

2. Method according to claim 1, wherein each lower structural connection arm (111; 121; 131; 141; 151; 161) is placed connecting between the two columns near their bases at least partially below the launching waterline (LWL) of the platform itself,
wherein in step f) of connecting the temporary thrust boxes to each other two-by-two, a watertight chamber is created at the junction area between the free ends of the respective two semi-arms,
and wherein said welding step g) is conducted in a dry environment despite being below the water level by virtue of said watertight chamber.

3. Method according to claim 1 or 2, wherein in said offshore semi-submersible platform (1) each of said floating columns (110, 120, 130) is connected to said at least one other floating column by means of at least one further upper structural connection arm (112; 122; 132; 142; 152; 162) which is placed connecting between the two columns at a greater height than that of the respective lower connection arm (111, 121, 131, 141, 151, 161) and wherein each of said sub-assemblies (11, 12, 13, 14) further comprises a semi-arm (112a; 112b; 122a; 122b; 132a; 132b; 142a; 142b; 152a; 152b; 162a; 162b) of the respective upper connection arm (112; 122; 132; 142; 152; 162) which is already structurally integrated in the column itself and extends cantilevered therefrom with a respective free end (112a'; 112b'; 122a'; 122b'; 132a'; 132b'; 142a'; 142b'; 152a'; 152b'; 162a'), the semi-arms (112a; 112b; 122a; 122b; 132a; 132b; 142a; 142b; 152a; 152b; 162a; 162b) of the respective upper connection arms (112; 122; 132; 142; 152; 162) of the different sub-assemblies (11, 12, 13, 14) being connected to each other similarly to the semi-arms (111a; 111b; 121a; 121b; 131a; 131b) of the respective lower connection arms (111; 121; 131) without the direct aid of the thrust boxes.

4. Method according to claim 3 when dependent on claim 2, wherein each upper structural connection arm (112; 122; 132) is placed connecting between the two columns at a greater height than that of the respective lower connection arm (111, 121, 131) above the launching waterline (LWL) of the platform itself and wherein the semi-arms (112a; 112b; 112b; 122a; 122b; 132a; 132b) of the respective upper connection arms (112; 122; 132) of the different sub-assemblies (11, 12, 13) being connected to each other similarly to the semi-arms (111a; 111b; 111b; 121a; 121a; 121b; 131a; 131b) of the respective lower connection arms (111; 121; 131) without the aid of the watertight chamber defined between the thrust boxes as it operates above the water level.

5. Method according to claim 3 or 4, wherein in said platform (1) the lower connection arms (111; 121; 131) are connected to the respective upper connection arms (112; 122; 132) by intermediate structures (600) and wherein said intermediate structures (600) are installed on said sub-assemblies (11, 12, 13) in a dry environment.

6. Method according to claim 5, wherein said sub-assemblies are made so that said intermediate structures (600) are positioned between the semi-arms of the lower and upper arms spaced from the free ends of the semi-arms themselves.

7. The method according to any one of the preceding claims, wherein said connection arms consist of tubular bodies, having a circular or polygonal section.

8. Method according to claim 7, wherein said axial alignment means (400) consist of: pins coaxial (401) to the tubular bodies; and/or flanges provided with pins (402) and corresponding perforated insertion counter-flanges (403).

9. Method according to any one of the preceding claims when dependent on claim 2, wherein each temporary thrust box (101, 102; 201, 202; 301, 302) is provided with a coupling portion (700) for interconnection with another thrust box, wherein the interconnection between two boxes through the respective coupling portions and the use of watertight septa allows to hydraulically isolate the respective housing seats of the semi-arms creating said watertight chamber (701) at the junction zone between the free ends of the respective two semi-arms.

10. Method according to any one of the preceding claims, wherein the step h) of removing the temporary thrust boxes includes operations of disconnecting the boxes from the lower arms and sinking them by ballast.

11. Method according to any one of the preceding claims, wherein said semi-submersible platform (1) comprises platform motion damping structures (801, 802, 803) associated with the floating columns and/or the connection arms and wherein said platform motion damping structures (801, 802, 803) are installed on each sub-assembly in a dry environment, preferably before step c) of launching.

12. Method according to any one of the preceding claims, wherein said offshore semi-submersible platform (1) comprises a peripheral annular structure (100) which in turn comprises at least one part of said plurality of floating columns (110, 120, 130), wherein each of the columns forming part of said peripheral annular structure (100) is connected to at least two other adjacent floating columns forming part of said annular structure by means of at least two lower structural connection arms (111; 121; 131) which are placed connecting between the columns near their bases, preferably at least partially below the launching waterline (LWL) of the platform itself, wherein said lower connection arms give structural continuity to said peripheral annular structure (100),
and wherein each of said sub-assemblies (11, 12, 13) comprises at least one of the floating columns (110, 120, 130) forming part of said annular structure and at least two semi-arms (111a; 111b; 121a; 121b; 131a; 131b) of the respective lower connection arms (111; 121; 131) which are already structurally integrated in the column itself and extend cantilevered therefrom with respective free ends (111a'; 111b'; 121a '; 121b'; 121a '; 131a'; 131b ').

13. Method according to claim 12, wherein said peripheral annular structure (100) has a polygonal shape and has one of said floating columns in each of the vertices of said polygonal shape.

14. Method according to claim 13, wherein said peripheral annular structure (100) of polygonal shape comprises one or more floating columns arranged along the sides of said polygonal shape.

15. Method according to claim 13, wherein said annular structure is triangular in shape, preferably equilateral, and comprises three floating columns (110, 120, 130), preferably identical to each other, each of which is placed at one of the vertices of the triangular annular structure and wherein each of said sub-assemblies (11, 12, 13) comprises one of the three floating columns (110, 120, 130) and at least two semi-arms (111a; 111b; 121a; 121b; 131a; 131b) of the respective lower connection arms (111; 121; 131) which are already structurally integrated in the column itself and extend cantilevered therefrom with respective free ends (111a'; 111b'; 121a'; 121b'; 131a'; 131b').

16. Method according to any one of claims 12 to 14, comprising at least one internal floating column which is arranged in the internal space delimited by said annular structure and is structurally connected to one or more columns of said annular structure by means of one or more internal lower structural connection arms, and wherein said at least one internal floating column is part of a sub-assembly comprising at least one or more semi-arms of internal lower structural connection arms.

17. Method according to any one of claims 1 to 11, wherein said semi-submersible platform (1) has a star structure having one of said floating columns which is arranged at the centre of said star and the remaining floating columns which are arranged radially around said central column and are connected thereto by means of said lower structural arms (141, 151, 161)
and wherein said sub-assemblies into which the platform is divided comprise:
- a central sub-assembly which in turn comprises said central column and a plurality of semi-arms of the respective lower connection arms which are already structurally integrated in the central column itself and extend cantilevered therefrom with respective free ends;
- a plurality of peripheral sub-assemblies each of which in turn comprises at least one of the columns arranged radially and at least one semi-arm of the respective lower connection arm.

## Patentansprüche

1. Verfahren zum Bauen und Starten einer halbtauchenden Offshore-Plattform (1), wobei die halbtauchende Offshore-Plattform (1) eine Mehrzahl von schwimmenden Säulen (110, 120, 130, 140) umfasst, von denen jede mit mindestens einer anderen der schwimmenden Säulen mittels mindestens eines unteren strukturellen Verbindungsarms (111; 121; 131; 141; 151; 161) verbunden ist, der verbindend zwischen den zwei Säulen in der Nähe von ihren Basen angeordnet ist,
wobei das Verfahren **dadurch gekennzeichnet ist, dass** es die folgenden Arbeitsschritte umfasst:
a) Herstellen der halbtauchenden Plattform (1) in einer trockenen Umgebung, indem sie in eine Mehrzahl von Unterbaugruppen (11, 12, 13, 14) unterteilt wird, von denen jede mindestens eine der schwimmenden Säulen (110, 120, 130, 140) und mindestens einen Halbarm (111a; 111b; 121a; 121b; 131a; 131b; 141a; 141b; 151a; 151b; 161a; 161b) des jeweiligen unteren strukturellen Verbindungsarms (111; 121; 131; 141; 151; 161) umfasst, wobei der Halbarm strukturell bereit in der Säule selbst integriert ist und sich freitragend von dieser mit einem jeweiligen freien Ende (111a'; 111b'; 121a'; 121b'; 131a'; 131b'; 141a'; 141b'; 151a'; 151b'; 161a'; 161b') erstreckt;
b) Versehen jeder Unterbaugruppe (11, 12, 13; 14) in einer trockenen Umgebung mit mindestens einem temporären Schubgehäuse (101, 102; 201, 202; 301, 302; 401, 402; 501, 502; 601, 602), das unterhalb des mindestens einen Halbarms (111a; 111b; 121a; 121b; 131a; 131b; 141a; 141b; 151a; 151b; 161a; 161b) positioniert ist und mit einem Aufnahmesitz des jeweiligen Halbarms sowie mindestens einer Ballastkammer versehen ist;
c) Getrenntes Zuwasserlassen der einzelnen Unterbaugruppen (11, 12, 13, 14), die aufgrund der jeweiligen schwimmenden Säule unabhängig schwimmen;
d) Einstellen für jede Unterbaugruppe des Ballasts des jeweiligen temporären Schubgehäuses, so dass eine ausgewogene Schwimmlage der Unterbaugruppe erhalten wird, die dem freien Ende des mindestens einen Halbarms erlaubt, auf derselben Höhe wie das freie Ende des Halbarms der Unterbaugruppe positioniert zu werden, die dazu bestimmt ist, eine angrenzende Position einzunehmen;
e) Bringen der Unterbaugruppen an den freien Enden der jeweiligen Halbarme paarweise beinander, bis sie ausgerichtet sind, mit Hilfe von axialen Ausrichtungsmitteln (400), die zuvor an den freien Enden der Halbarme angeordnet sind;
f) Verbinden der temporären Schubgehäuse paarweise miteinander;
g) Schweißen der freien Enden der Halbarme miteinander, um eine strukturelle Verbindung zwischen den Säulen zu schaffen;
h) Entfernen der temporären Schubgehäuse.

2. Verfahren nach Anspruch 1, wobei jeder untere strukturelle Verbindungsarm (111; 121; 131; 141; 151; 161) verbindend zwischen den zwei Säulen in der Nähe von ihren Basen mindestens teilweise unterhalb der Startwasserlinie (LWL) der Plattform selbst angeordnet ist,
wobei im Schritt f) des Verbindens der temporären Schubgehäuse miteinander paarweise, eine wasserdichte Kammer in dem Verbindungsbereich zwischen den freien Enden der jeweiligen zwei Halbarme geschaffen wird,
und wobei der Schweißschritt g) in einer trockenen Umgebung durchgeführt wird, obwohl sie sich unterhalb des Wasserspiegels befindet aufgrund der wasserdichten Kammer.

3. Verfahren nach Anspruch 1 oder 2, wobei bei der halbtauchenden Offshore-Plattform (1) jede der schwimmenden Säulen (110, 120, 130) mit der mindestens einen anderen schwimmenden Säule mittels mindestens eines weiteren oberen strukturellen Verbindungsarms (112; 122; 132; 142; 152; 162) verbunden ist, der verbindend zwischen den zwei Säulen an einer größeren Höhe als die des jeweiligen unteren Verbindungsarms (111; 121; 131; 141; 151; 161) angeordnet ist und wobei jede der Unterbaugruppen (11, 12, 13, 14) ferner einen Halbarm (112a; 112b; 122a; 122b; 132a; 132b; 142a; 142b; 152a; 152b; 162a; 162b) des jeweiligen oberen Verbindungsarms (112; 122; 132; 142; 152; 162) umfasst, der bereits strukturell in der Säule selbst integriert ist und sich freitragend von dieser mit einem jeweiligen freien Ende (112a'; 112b'; 122a'; 122b'; 132a'; 132b'; 142a'; 142b'; 152a'; 152b'; 162a') erstreckt, wobei die Halbarme (112a; 112b; 122a; 122b; 132a; 132b; 142a; 142b; 152a; 152b; 162a; 162b) der jeweiligen oberen Verbindungsarme (112; 122; 132; 142; 152; 162) der verschiedenen Unterbaugruppen (11, 12, 13, 14) miteinander ähnlich wie die Halbarme (111a; 111b; 121a; 121b; 131a; 131b) der jeweiligen unteren Verbindungsarme (111; 121; 131) ohne die direkte Hilfe der Schubgehäuse verbunden werden.

4. Verfahren nach Anspruch 3, wenn abhängig von Anspruch 2, wobei jeder obere strukturelle Verbindungsarm (112; 122; 132) verbindend zwischen den zwei Säulen an einer größeren Höhe als die des jeweiligen unteren Verbindungsarms (111, 121, 131) oberhalb der Startwasserlinie (LWL) der Plattform selbst angeordnet ist und wobei die Halbarme (112a; 112b; 112b; 122a; 122b; 132a; 132b) der jeweiligen oberen Verbindungsarme (112; 122; 132) der verschiedenen Unterbaugruppen (11, 12, 13) miteinander ähnlich wie die Halbarme (111a; 111b; 111b; 121a; 121a; 121b; 131a; 131b) der jeweiligen unteren Verbindungsarme (111; 121; 131) ohne die Hilfe der wasserdichten Kammer verbunden werden, die zwischen den Schubgehäuse definiert wird, da sie oberhalb des Wasserspiegels arbeitet.

5. Verfahren nach Anspruch 3 oder 4, wobei bei der Plattform (1) die unteren Verbindungsarme (111; 121; 131) mit den jeweiligen oberen Verbindungsarmen (112; 122; 132) mittels Zwischenstrukturen (600) miteinander verbunden sind und wobei die Zwischenstrukturen (600) an den Unterbaugruppen (11, 12, 13) in einer trockenen Umgebung installiert werden.

6. Verfahren nach Anspruch 5, wobei die Unterbaugruppen hergestellt sind, sodass die Zwischenstrukturen (600) zwischen den Halbarmen der unteren und der oberen Arme beabstandet von den freien Enden der Halbarme selbst positioniert sind.

7. Verfahren nach einem der vorhergehenden Ansprüche, wobei die Verbindungsarme aus rohrförmigen Körpern bestehen, die einen kreisförmigen oder polygonalen Schnitt aufweisen.

8. Verfahren nach Anspruch 7, wobei die axialen Ausrichtungsmittel (400) aus folgendem bestehen: Stiften (401), die den rohrförmigen Körpern koaxial ausgebildet sind; und/oder Flanschen, die mit Stiften (402) und entsprechenden perforierten Einführungsgegenflanschen (403) versehen sind.

9. Verfahren nach einem der vorhergehenden Ansprüche, wenn abhängig von Anspruch 2, wobei jedes temporäre Schubgehäuse (101, 102; 201, 202; 301, 302) mit einem Kupplungsabschnitt (700) zur Verbindung mit einem anderen Schubgehäuse versehen ist, wobei die Verbindung zwischen zwei Gehäusen über die jeweiligen Kupplungsabschnitte und die Verwendung der wasserdichten Trennwände ermöglicht, die jeweiligen Aufnahmesitze der Halbarme hydraulisch zu isolieren, indem die wasserdichte Kammer (701) in dem Verbindungsbereich zwischen den freien Enden der jeweiligen zwei Halbarme geschaffen wird.

10. Verfahren nach einem der vorhergehenden Ansprüche, wobei der Schritt h) von Entfernen der temporären Schubgehäusen Vorgänge von Trennen der Gehäusen von den unteren Armen und deren Absenken durch Ballast umfasst.

11. Verfahren nach einem der vorhergehenden Ansprüche, wobei die halbtauchende Plattform (1) Plattformbewegungs-Dämpfungsstrukturen (801, 802, 803) umfasst, die den schwimmenden Säulen und/oder den Verbindungsarmen zugeordnet sind, und wobei die Plattformbewegungs-Dämpfungsstrukturen (801, 802, 803) an jeder Unterbaugruppe in einer trockenen Umgebung installiert werden, vorzugsweise vor dem Schritt e) von Starten.

12. Verfahren nach einem der vorhergehenden Ansprüche, wobei die halbtauchende Offshore-Plattform (1) eine umlaufende ringförmige Struktur (100) umfasst, die wiederum mindestens einen Teil der Mehrzahl von schwimmenden Säulen (110, 120, 130) umfasst, wobei jede der Säulen, die Teil der umlaufenden ringförmigen Struktur (100) bildet, mit mindestens zwei anderen angrenzenden schwimmenden Säulen, die Teil der ringförmigen Struktur sind, mittels mindestens zwei unterer struktureller Verbindungsarme (111; 121; 131) verbunden ist, die verbindend zwischen den Säulen in der Nähe von ihren Basen angeordnet sind, vorzugsweise mindestens teilweise unterhalb der Startwasserlinie (LWL) der Plattform selbst, wobei die unteren Verbindungsarme der umlaufenden ringförmigen Struktur (100) strukturelle Kontinuität verleihen,
und wobei jede der Unterbaugruppen (11, 12, 13) mindestens eine der schwimmenden Säulen (110, 120, 130), die Teil der ringförmigen Struktur ist und mindestens zwei Halbarme (111a; 111b; 121a; 121b; 131a; 131b) der jeweiligen unteren Verbindungsarme (111; 121; 131) umfasst, die bereits strukturell in der Säule selbst integriert sind und sich freitragend von dieser mit jeweiligen freien Enden (111a'; 111b'; 121a'; 121b'; 131a'; 131b') erstrecken.

13. Verfahren nach Anspruch 12, wobei die umlaufende ringförmige Struktur (100) eine polygonale Gestalt aufweist und eine der schwimmenden Säulen in jedem der Eckpunkte der polygonalen Gestalt aufweist.

14. Verfahren nach Anspruch 13, wobei die umlaufende ringförmige Struktur (100) polygonaler Gestalt eine oder mehrere schwimmende Säulen umfasst, die entlang der Seiten der polygonalen Gestalt angeordnet sind.

15. Verfahren nach Anspruch 13, wobei die ringförmige Struktur eine dreieckige Gestalt vorzugsweise gleichseitig aufweist, und drei schwimmende Säulen (110, 120, 130) umfasst, die vorzugsweise identisch zueinander sind, von denen jede an einem der Eckpunkte der dreieckigen ringförmigen Struktur angeordnet ist und wobei jede der Unterbaugruppen (11, 12, 13) eine der drei schwimmenden Säulen (110, 120, 130) und mindestens zwei Halbarme (111a; 111b; 121a; 121b; 131a; 131b) der jeweiligen unteren Verbindungsarme (111; 121; 131) umfasst, die bereits strukturell in der Säule selbst integriert sind und sich freitragend von dieser mit jeweiligen freien Enden (111a'; 111b'; 121a'; 121b'; 131a'; 131b') erstrecken.

16. Verfahren nach einem der Ansprüche 12 bis 14, umfassend mindestens eine innere schwimmende Säule, die in dem inneren Raum angeordnet ist, der durch die ringförmige Struktur begrenzt wird, und die strukturell mit einer oder mehreren Säulen der ringförmigen Struktur mittels eines oder mehrerer innerer unterer struktureller Verbindungsarme verbunden ist, und wobei die mindestens eine interne schwimmende Säule Teil einer Unterbaugruppe ist, die mindestens einen oder mehrere Halbarme der inneren unteren strukturellen Verbindungsarme umfasst.

17. Verfahren nach einem der Ansprüche 1 bis 11, wobei die halbtauchende Plattform (1) eine Sternstruktur aufweist, die eine der schwimmenden Säulen aufweist, die in dem Zentrum des Sterns angeordnet ist und die übrigen Schwimmsäulen, die radial um die Zentralsäule angeordnet sind und mittels der unteren strukturellen Arme (141, 151, 161) mit dieser verbunden sind
und wobei die Unterbaugruppen, in die die Plattform unterteilt wird, umfassen:
- eine zentrale Unterbaugruppe, die wiederum die Zentralsäule und eine Mehrzahl von Halbarme der jeweiligen unteren Verbindungsarme umfasst, die bereits strukturell in der Zentralsäule selbst integriert sind und sich freitragend von dieser mit jeweiligen freien Enden erstrecken;
- eine Mehrzahl von umlaufenden Unterbaugruppen, von denen jede wiederum mindestens eine der Säulen, die radial angeordnet sind und mindestens einen Halbarm des jeweiligen unteren Verbindungsarms umfasst.

## Revendications

1. Procédé de construction et de lancement d'une plate-forme semi-submersible offshore (1), dans lequel ladite plate-forme semi-submersible offshore (1) comprend une pluralité de colonnes flottantes (110, 120, 130, 140), dont chacune est connectée à au moins une autre desdites colonnes flottantes au moyen d'au moins un bras de connexion structurelle inférieur (111; 121; 131; 141; 151; 161) qui est placé en connexion entre les deux colonnes près de leurs bases,
ledit procédé étant **caractérisé en ce qu'**il comprend les étapes opératoires suivantes:
a) réaliser ladite plate-forme semi-submersible (1) dans un environnement sec en la divisant en une pluralité de sous-ensembles (11, 12, 13, 14) comprenant chacun au moins une des colonnes flottantes (110, 120, 130, 140) et au moins un demi-bras (111a; 111b; 121a; 121b; 131a; 131b; 141a; 141b; 151a; 151b; 161a; 161b) du bras de connexion structurelle inférieur respectif (111; 121; 131; 141; 151; 161), lequel demi-bras est déjà structurellement intégré dans la colonne elle-même et s'étend en porte-à-faux à partir de celle-ci avec une extrémité libre respective (111a'; 111b'; 121a'; 121b'; 131a'; 131b'; 141a'; 141b'; 151a'; 151b'; 161a'; 161b');
b) pourvoir chaque sous-ensemble (11, 12, 13; 14) dans un environnement sec d'au moins une boîte de poussée temporaire (101, 102; 201, 202; 301, 302; 401, 402; 501, 502; 601, 602), qui est positionnée au-dessous dudit au moins un demi-bras (111a; 111b; 121a; 121b; 131a; 131b; 141a; 141b; 151a; 151b; 161a; 161b) et est pourvue d'un siège de logement du demi-bras respectif et d'au moins une chambre de ballast;
c) lancer séparément dans l'eau les sous-ensembles individuels (11, 12, 13, 14) qui flottent indépendamment en vertu de la colonne flottante respective;
d) ajuster pour chaque sous-ensemble le ballast de la boîte de poussée temporaire respective de manière à obtenir une flottabilité équilibrée du sous-ensemble qui permet à l'extrémité libre dudit au moins un demi-bras d'être positionnée à la même hauteur que l'extrémité libre du demi-bras du sous-ensemble destiné à assumer une position adjacente;
e) rapprocher les sous-ensembles au niveau des extrémités libres des demi-bras respectifs deux par deux jusqu'à ce qu'ils soient alignés, à l'aide de moyens d'alignement axial (400) disposés préalablement aux extrémités libres des demi-bras;
f) connecter les boîtes de poussée temporaires entre elles deux par deux;
g) souder les extrémités libres des demi-bras ensemble de manière à créer une connexion structurelle entre les colonnes;
h) retirer les boîtes de poussée temporaires.

2. Procédé selon la revendication 1, dans lequel chaque bras de connexion structurelle inférieur (111; 121; 131; 141; 151; 161) est placé en connexion entre les deux colonnes près de leurs bases au moins partiellement au-dessous de la ligne de flottaison de lancement (LWL) de la plate-forme elle-même,
dans lequel lors de l'étape f) de connexion des boîtes de poussée temporaires entre elles deux par deux, une chambre étanche est créée dans la zone de jonction entre les extrémités libres des deux demi-bras respectifs,
et dans lequel ladite étape de soudage g) est conduite dans un environnement sec malgré le fait d'être au-dessous du niveau de l'eau en vertu de ladite chambre étanche.

3. Procédé selon la revendication 1 ou 2, dans lequel dans ladite plate-forme semi-submersible offshore (1) chacune desdites colonnes flottantes (110, 120, 130) est connectée à ladite au moins une autre colonne flottante au moyen d'au moins un bras de connexion structurelle supérieur supplémentaire (112; 122; 132; 142; 152; 162) qui est placé en connexion entre les deux colonnes à une hauteur plus grande que celle du bras de connexion inférieur respectif (111; 121; 131; 141; 151; 161) et dans lequel chacun desdits sous-ensembles (11, 12, 13, 14) comprend en outre un demi-bras (112a; 112b; 122a; 122b; 132a; 132b; 142a; 142b; 152a; 152b; 162a; 162b) du bras de connexion supérieur respectif (112; 122; 132; 142; 152; 162) qui est déjà structurellement intégré dans la colonne elle-même et s'étend en porte-à-faux à partir de celle-ci avec une extrémité libre respective (112a'; 112b'; 122a'; 122b'; 132a'; 132b'; 142a'; 142b'; 152a'; 152b'; 162a'), les demi-bras (112a; 112b; 122a; 122b; 132a; 132b; 142a; 142b; 152a; 152b; 162a; 162b) des bras de connexion supérieurs respectifs (112; 122; 132; 142; 152; 162) des différents sous-ensembles (11, 12, 13, 14) étant connectés entre eux de manière similaire aux demi-bras (111a; 111b; 121a; 121b; 131a; 131b) des bras de connexion inférieurs respectifs (111; 121; 131) sans l'aide directe des boîtes de poussée.

4. Procédé selon la revendication 3 lorsqu'il dépend de la revendication 2, dans lequel chaque bras de connexion structurelle supérieur (112; 122; 132) est placé en connexion entre les deux colonnes à une hauteur plus grande que celle du bras de connexion inférieur respectif (111, 121, 131) au-dessus de la ligne de flottaison de lancement (LWL) de la plate-forme elle-même et dans lequel les demi-bras (112a; 112b; 112b; 122a; 122b; 132a; 132b) des bras de connexion supérieurs respectifs (112; 122; 132) des différents sous-ensembles (11, 12, 13) sont connectés entre eux de manière similaire aux demi-bras (111a; 111b; 111b; 121a; 121a; 121b; 131a; 131b) des bras de connexion inférieurs respectifs (111; 121; 131) sans l'aide de la chambre étanche définie entre les boîtes de poussée car cela opère au-dessus du niveau de l'eau.

5. Procédé selon la revendication 3 ou 4, dans lequel, dans ladite plate-forme (1), les bras de connexion inférieurs (111; 121; 131) sont connectés aux bras de connexion supérieurs respectifs (112; 122; 132) au moyen de structures intermédiaires (600) et dans lequel lesdites structures intermédiaires (600) sont installées sur lesdits sous-ensembles (11, 12, 13) dans un environnement sec.

6. Procédé selon la revendication 5, dans lequel lesdits sous-ensembles sont réalisés de sorte que lesdites structures intermédiaires (600) sont positionnées entre les demi-bras des bras inférieurs et supérieurs espacées des extrémités libres des demi-bras eux-mêmes.

7. Procédé selon l'une quelconque des revendications précédentes, dans lequel lesdits bras de connexion consistent en des corps tubulaires ayant une section circulaire ou polygonale.

8. Procédé selon la revendication 7, dans lequel lesdits moyens d'alignement axial (400) consistent en: des broches coaxiales (401) aux corps tubulaires; et/ou des brides pourvues de broches (402) et de contre-brides d'insertion perforées correspondantes (403).

9. Procédé selon l'une quelconque des revendications précédentes lorsqu'il dépend de la revendication 2, dans lequel chaque boîte de poussée temporaire (101, 102; 201, 202; 301, 302) est pourvue d'une portion d'accouplement (700) pour l'interconnexion avec une autre boîte de poussée, dans lequel l'interconnexion entre deux boîtes au moyen des portions d'accouplement respectives et l'utilisation de cloisons étanches permet d'isoler hydrauliquement les sièges de logement respectifs des demi-bras en créant ladite chambre étanche (701) dans la zone de jonction entre les extrémités libres des deux demi-bras respectifs.

10. Procédé selon l'une quelconque des revendications précédentes, dans lequel l'étape h) de retrait des boîtes de poussée temporaires comprend des opérations de déconnexion des boîtes des bras inférieurs et leur immersion par ballast.

11. Procédé selon l'une quelconque des revendications précédentes, dans lequel ladite plate-forme semi-submersible (1) comprend des structures d'amortissement du mouvement de la plate-forme (801, 802, 803) associées aux colonnes flottantes et/ou aux bras de connexion et dans lequel lesdites structures d'amortissement du mouvement de la plate-forme (801, 802, 803) sont installées sur chaque sous-ensemble dans un environnement sec, de préférence avant l'étape e) de lancement.

12. Procédé selon l'une quelconque des revendications précédentes, dans lequel ladite plate-forme semi-submersible offshore (1) comprend une structure annulaire périphérique (100) qui comprend à son tour au moins une partie de ladite pluralité de colonnes flottantes (110, 120, 130), dans lequel chacune des colonnes faisant partie de ladite structure annulaire périphérique (100) est connectée à au moins deux autres colonnes flottantes adjacentes faisant partie de ladite structure annulaire au moyen d'au moins deux bras de connexion structurelle inférieurs (111; 121; 131) qui sont placés en connexion entre les colonnes près de leurs bases, de préférence au moins partiellement au-dessous de la ligne de flottaison de lancement (LWL) de la plate-forme elle-même, dans lequel lesdits bras de connexion inférieurs donnent une continuité structurelle à ladite structure annulaire périphérique (100),
et dans lequel chacun desdits sous-ensembles (11, 12, 13) comprend au moins une des colonnes flottantes (110, 120, 130) faisant partie de ladite structure annulaire et au moins deux demi-bras (111a; 111b; 121a; 121b; 131a; 131b) des bras de connexion inférieurs respectifs (111; 121; 131) qui sont déjà structurellement intégrés dans la colonne elle-même et s'étendent en porte-à-faux à partir de celle-ci avec des extrémités libres respectives (111a'; 111b'; 121a'; 121b'; 131a'; 131b').

13. Procédé selon la revendication 12, dans lequel ladite structure annulaire périphérique (100) a une forme polygonale et comporte une desdites colonnes flottantes dans chacun des sommets de ladite forme polygonale.

14. Procédé selon la revendication 13, dans lequel ladite structure annulaire périphérique (100) de forme polygonale comprend une ou plusieurs colonnes flottantes disposées le long des côtés de ladite forme polygonale.

15. Procédé selon la revendication 13, dans lequel ladite structure annulaire est de forme triangulaire, de préférence équilatérale, et comprend trois colonnes flottantes (110, 120, 130), de préférence identiques entre elles, dont chacune est placée à l'un des sommets de la structure annulaire triangulaire et dans lequel chacun desdits sous-ensembles (11, 12, 13) comprend l'une des trois colonnes flottantes (110, 120, 130) et au moins deux demi-bras (111a; 111b; 121a; 121b; 131a; 131b) des bras de connexion inférieurs respectifs (111; 121; 131) qui sont déjà structurellement intégrés dans la colonne elle-même et s'étendent en porte-à-faux à partir de celle-ci avec des extrémités libres respectives (111a'; 111b'; 121a'; 121b'; 131a'; 131b').

16. Procédé selon l'une quelconque des revendications 12 à 14, comprenant au moins une colonne flottante interne qui est disposée dans l'espace interne délimité par ladite structure annulaire et qui est structurellement connectée à une ou plusieurs colonnes de ladite structure annulaire au moyen d'un ou plusieurs bras de connexion structurelle inférieurs internes, et dans lequel ladite au moins une colonne flottante interne fait partie d'un sous-ensemble comprenant au moins un ou plusieurs demi-bras de bras de connexion structurelle inférieurs internes.

17. Procédé selon l'une quelconque des revendications 1 à 11, dans lequel ladite plate-forme semi-submersible (1) présente une structure en étoile ayant l'une desdites colonnes flottantes disposée au centre de ladite étoile et les colonnes flottantes restantes disposées radialement autour de ladite colonne centrale et connectées à celle-ci au moyen desdits bras structurels inférieurs (141, 151, 161)
et dans lequel les sous-ensembles dans lesquels la plate-forme est divisée comprennent:
- un sous-ensemble central qui comprend à son tour ladite colonne centrale et une pluralité de demi-bras des bras de connexion inférieurs respectifs qui sont déjà structurellement intégrés dans la colonne centrale elle-même et s'étendent en porte-à-faux à partir de celle-ci avec des extrémités libres respectives;
- une pluralité de sous-ensembles périphériques dont chacun comprend à son tour au moins une des colonnes disposées radialement et au moins un demi-bras du bras de connexion inférieur respectif.
